# EUROPEAN PATENT APPLICATION

(11) **EP 4 265 309 A1**
(43) Date of publication of application: **25.10.2023**
(21) Application number: 21906334.4
(22) Date of filing: 01.12.2021
(51) Int. Cl.: A63F 13/795, A63F 13/822, A63F 13/847, A63F 13/86

(54) **PROGRAM, COMPUTER, SYSTEM, AND METHOD**

(30) Priority: 18.12.2020 JP 2020210510
(71) Applicant: COLOPL, INC., Tokyo 107-0052 (JP)
(72) Inventor: TSUNODA, Ryoji, Tokyo 107-0052 (JP); MATSUBARA, Natsuha, Tokyo 107-0052 (JP); SAWADA, Junki, Tokyo 107-0052 (JP)
(74) Representative: Gille Hrabal Partnerschaftsgesellschaft mbB Patentanwälte
(86) International application number: PCT/JP2021/044004
(87) International publication number: WO 2022/130971

(57) **Abstract**

This program causes execution of: receipt of play information from a distribution terminal; distribution of distribution information to one or more viewing terminals in accordance with the received play information; receipt of recruiting information transmitted by the distribution terminal that has accepted a recruitment operation performed by a distribution user; if the recruiting information has been received, instruction causing the one or more viewing terminals to issue a notification calling for participation in the content as a player; receipt of participation information transmitted by the viewing terminal that has accepted a participation operation performed by a viewing user; formation of a party including, at least, the distribution user and the viewing user using the viewing terminal that received the participation information; and causing one or more viewing users included in the formed party to participate in the content as a player.

## Description

### TECHNICAL FIELD

The present disclosure relates to a program, a computer, a system, and a method.

### BACKGROUND ART

Patent documents 1 to 4 disclose a gaming system including a server and a plurality of terminals. In the gaming system, content including at least game play by a distributor is distributed to a terminal used by a viewer. In the gaming system, the viewer can participate in the game play of the distributor.

### LIST OF CITED REFERENCES

### Patent documents

Patent Document 1: Japanese Patent Application Publication No. 2019-97888
Patent Document 2: Japanese Patent Application Publication No. 2015-112500
Patent Document 3: Japanese Patent Application Publication No. 2015-36033
Patent Document 4: Japanese Patent Application Publication No. 2020-44086

### SUMMARY OF INVENTION

### TECHNICAL PROBLEM

In the gaming system disclosed in Patent documents 1 to 4, the viewer of the content can participate in the game play of the distributor in a form in which the viewer takes a distributor's place in the game play, or in a form in which the viewer becomes an opponent playing against the distributor in the game play. However, when the viewer of the content can only participate in these forms, it is difficult to obtain a sense of unity between the distributor and the viewer.

### SOLUTION TO PROBLEM

According to an embodiment illustrated in the present disclosure, there is provided, a program which causes a computer to execute: receiving play information according to game play executed with a distribution terminal by a distribution user from the distribution terminal; distributing distribution information according to the play information that is received to one or more viewing terminals to allow a viewing user using the one or more viewing terminals to view content including at least the game play by the distribution user; receiving invitation information sent by the distribution terminal which has accepted an invitation operation by the distribution user; when the invitation information is received, sending calling information to the viewing terminal, and instructing the one or more viewing terminals to perform a notification for calling for participation in the content as a player; receiving participation information sent by the viewing terminal which has accepted a participation operation by the viewing user among the one or more viewing terminals; forming a party including at least the distribution user and the viewing user using the viewing terminal which has received the participation information; and causing the viewing user included in the party that is formed to participate in the content as the player, the viewing user including one or more viewing users.

### ADVANTAGEOUS EFFECTS OF INVENTION

With the present disclosure, it is easy to obtain a sense of unity between the distributor and the viewer. It is possible to provide an unconventional enjoyment of the game.

### BRIEF DESCRIPTION OF THE DRAWINGS

Fig. 1 illustrates an overview of a gaming system according to a first embodiment.
Fig. 2 illustrates an example of a module configuration of a terminal included in the gaming system of Fig. 1.
Fig. 3 illustrates an example of a module configuration of a server included in the gaming system of Fig. 1.
Fig. 4 illustrates an example of a screen transition in the terminal of Fig. 2.
Fig. 5 illustrates an example of the screen transition in the terminal of Fig. 2.
Fig. 6 illustrates an example of a data structure of history information according to the first embodiment.
Fig. 7 illustrates an example of a flow of distribution processing and viewing processing according to the first embodiment.
Fig. 8 illustrates an example of a flow of party member invitation processing according to the first embodiment.
Fig. 9 illustrates an example of a flow of matching processing, battle processing, and disbanding processing according to the first embodiment.
Fig. 10 illustrates an example of a home screen and a viewing screen which are displayed on the terminal of Fig. 2.
Fig. 11 illustrates an example of the screen transition in the terminal of Fig. 2 when viewing of content is started.
Fig. 12 illustrates an example of the screen transition when a party member is invited in the terminal of Fig. 2.
Fig. 13 illustrates an example of the screen transition when an applicant list is displayed in the terminal of Fig. 2.
Fig. 14 illustrates an example of the screen transition when a participation confirmation to a party is performed in the terminal of Fig. 2.
Fig. 15 illustrates an example of the home screen displayed on the terminal of Fig. 2 after the party is formed.
Fig. 16 illustrates an example of a matching screen displayed on the terminal of Fig. 2.
Fig. 17 illustrates an example of a battle screen and a viewing screen which are displayed on the terminal of Fig. 2.
Fig. 18 illustrates an example of the screen transition when a party member is invited through a timeline screen according to a second embodiment.
Fig. 19 illustrates an example of a flow of processing of an entry invitation performed through the timeline screen according to second embodiment.
Fig. 20 illustrates an example of a second battle screen and a second viewing screen according to the second embodiment.
Fig. 21 illustrates an example of the flow of the processing of the entry invitation performed from the second battle screen according to a third embodiment.
Fig. 22 illustrates an example of the flow of the processing of the entry invitation according to a fourth embodiment.
Fig. 23 illustrates an example of a first battle screen according to a fifth embodiment.
Fig. 24 illustrates an example of a function of an assisting character according to the fifth embodiment.
Fig. 25 illustrates an example of the function of the assisting character according to the fifth embodiment.
Fig. 26 illustrates an example of a situation where an assisting object is arranged according to the fifth embodiment.

### DESCRIPTION OF EXEMPLARY EMBODIMENTS

A gaming system according to the present disclosure will be described with reference to the drawings.

### First embodiment

### Overview of gaming system

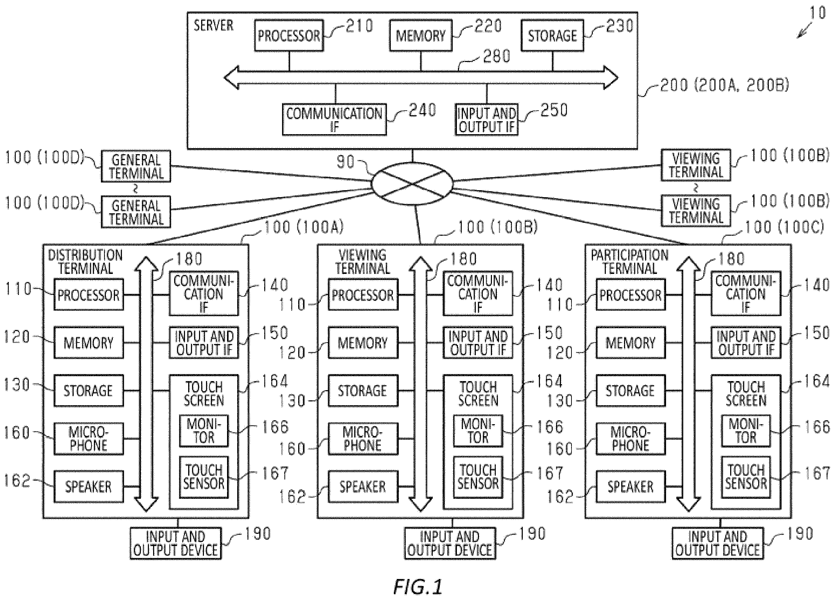

As illustrated in Fig. 1, a gaming system 10 includes a network 90, a plurality of terminals 100, and one or more servers 200. The gaming system 10 is provided as a home system or a commercial system. The plurality of terminals 100 is configured to communicate with the server 200 via the network 90. As an example, the gaming system 10 provides a multiplayer game. In the following description, when a term "game" is simply used, this means a game provided by the gaming system 10. The plurality of terminals 100 is an example of a computer. The one or more servers 200 are examples of a computer.

### Network

As an example, the network 90 is configured by the Internet and a mobile communication system including a wireless base station.

As an example, the mobile communication system is achieved as a 3G, 4G, or 5G mobile communication system, LTE (Long Term Evolution), or a wireless network which can be connected to the Internet by an access point.

### Hardware configuration of terminal

The plurality of terminals 100 may be used as game terminals with which a game is played. The terminal 100 used as the game terminal provides a game function of playing the game provided by the gaming system 10 to a user. Some terminals 100 may be used as distribution terminals 100A. The distribution terminal 100A provides a distribution function of distributing content including at least game play of a distribution user who is a distributor in real time to the user. The distribution terminal 100A is used by the distribution user. The content may include a moving image or a still image that is the game play of the distribution user. The content may include at least one of voice or text data.

Some terminals 100 may be used as viewing terminals 100B. The viewing terminal 100B provides a viewing function of viewing the content distributed by the distribution user to a user. The viewing terminal 100B is used by a viewing user who is a viewer. Some terminals 100 may be used as participation terminals 100C. The participation terminal 100C provides a participation function of participating in the game play of the distribution user to a user. The participation terminal 100C is used by a participation user.

The distribution user and the participation user are players of the game. That is, the distribution terminal 100A and the participation terminal 100C also serve as game terminals. The terminals 100 other than the distribution terminal 100A, the viewing terminal 100B, and the participation terminal 100C are general terminals 100D. The general terminal 100D may be used as a game terminal. The general terminal 100D is used by a general user other than the distribution user, the viewing user, and the participation user.

As an example, the terminal 100 is a smartphone. The terminal 100 may be a mobile terminal device such as a feature phone, PDA (registered trademark) (Personal Digital Assistant), or a tablet computer. The terminal 100 may be a stationary terminal device such as a personal computer (PC) or a workstation. For example, the terminal 100 includes a processor 110, a memory 120, and a storage 130. The terminal 100 may further include a communication interface (IF) 140 and an input and output IF 150. The terminal 100 may further include a microphone 160, a speaker 162, and a touch screen 164. Each of the plurality of components included in the terminal 100 is connected to a communication bus 180.

The processor 110 executes a series of instructions included in a program stored in the memory 120 or the storage 130 according to a signal supplied to the terminal 100 or according to a state where a predetermined condition is satisfied. For example, the processor 110 is achieved as a CPU (Central Processing Unit), a GPU (Graphics Processing Unit), an MPU (Micro Processor Unit), an FPGA (Field-Programmable Gate Array), or other computing devices.

The memory 120 temporarily saves the program or data. As an example, the program is read from the storage 130. The data may include data sent to the terminal 100 and data generated by the processor 110. For example, the memory 120 is achieved as a RAM (Random Access Memory) or other volatile memories.

The storage 130 permanently stores the program and the data. For example, the storage 130 is achieved as a ROM (Read-Only Memory), a hard disc device, a flash memory, or other non-volatile storage devices. The storage 130 may be achieved as a detachable storage device like a memory card.

The program stored in the storage 130 includes a game program, a distribution program, a viewing program, and a communication program. The game program achieves a game function of providing a game space that is an example of a virtual space, and providing game play in the game space. As an example, the game play includes operating an object (for example, an avatar) which is arranged in the game space. The distribution program achieves a distribution function of distributing the content including at least the game play in the game space. While this distribution function is achieved, the terminal 100 serves as the distribution terminal 100A. In addition, the game program achieves a participation function of participating in the game play of the distribution user. While this participation function is achieved, the terminal 100 serves as the participation terminal 100C.

The viewing program achieves a viewing function of providing a viewing space that is an example of the virtual space, and providing viewing of the content via the viewing space. While this viewing function is achieved, the terminal 100 serves as the viewing terminal 100B. As an example, the viewing of the content using the terminal 100 includes viewing of an object arranged in the viewing space. The communication program achieves a function of communicating with another computer (for example, the server 200). The program stored in the storage 130 may include an operating system, a simulation program, a user authentication program, and other programs.

For example, the data stored in the storage 130 includes definition data of the virtual spaces (the game space and the viewing space), and object data for various types of objects arranged in the virtual spaces. As an example, a certain game space and a viewing space for viewing the game space are defined by using same definition data. As an example, in a certain game space and a viewing space for viewing the game space, one or more objects are arranged by using same object data. As an example, the viewing space replicates the game space the distribution of which is taking place. That is, the distribution terminal 100A, the viewing terminal 100B, the participation terminal 100C, and the general terminal 100D may share a single virtual space. The game space and the viewing space are not limited to spaces represented in three dimensions. For example, one or both of the game space and the viewing space may be spaces represented in two dimensions, or spaces represented by a still image and represented by input data such as a sound, voice, or text data.

The communication IF 140 is connected to the network 90. The communication IF 140 communicates with another computer (for example, the server 200) which is connected to the network 90. For example, the communication IF 140 is achieved as a LAN (Local Area Network) or other wired communication IFs. For example, the communication IF 140 is achieved as Wi-Fi (registered trademark), Bluetooth (registered trademark), NFC (Near Field Communication), or other wireless communication IFs. The communication IF 140 is not limited to the above described configuration.

The input and output IF 150 communicates with an external input and output device 190. For example, the input and output IF 150 is achieved as a USB (Universal Serial Bus), a DVI (Digital Visual Interface), an HDMI (registered trademark) (High-Definition Multimedia Interface), or other wired communication IFs. For example, the input and output IF 150 is achieved as Bluetooth (registered trademark), or other wireless communication IFs.

An example, the input and output device 190 is a controller. For example, the input and output IF 150 sends an instruction output from the processor 110 to the controller. The instruction is used to instruct the controller to vibrate, output audio, or emit light. When the controller receives an instruction, the controller executes vibration, audio output, or light emission according to the instruction. The controller has one or more operation parts. For example, the one or more operation parts include a button, a key, a switch, a handle, a bar, a touch pad, or a stick. The controller sends an output value based on an operation by the user on the operation part to the terminal 100. As an example, the controller may include a motion sensor such as an acceleration sensor and an angular rate sensor. The controller may be configured to send the output value of the motion sensor to the terminal 100. The controller may be attachable to or detachable from the terminal 100.

The input and output device 190 is not limited to the above described configuration. For example, the input and output device 190 may be a camera. The camera may be configured to send a captured image capturing the user to the terminal 100. For example, the input and output device 190 may be a ranging sensor. The ranging sensor may be configured to send an output value based on sensing of a hand of the user, a marker, or the like to the terminal 100.

The microphone 160 converts a speech of the user into a voice signal (electric signal) to be sent to the processor 110. The speaker 162 converts the voice signal into voice to be output to the user. Each of the terminals 100 may include, in addition to or instead of the speaker 162, an earphone, or an earphone jack to which an earphone can be connected.

The touch screen 164 includes a monitor 166 and a touch sensor 167. The monitor 166 is achieved as a transmissive or non-transmissive display device. For example, the monitor 166 is achieved as a liquid crystal monitor, an organic EL (Electro Luminescence) monitor, or other display devices. The monitor 166 displays various types of images. The images to be displayed on the monitor 166 include various types of objects such as a background, an avatar of the user, an obstacle, a character, a window, a button, a menu, a list, and an icon. The monitor 166 is not limited to the above described configuration. For example, the monitor 166 may be a 3D monitor including a sub monitor which displays an image for the left eye and a sub monitor which displays an image for the right eye.

The touch sensor 167 sends an output value based on an operation by the user on the monitor 166 to the processor 110. As an example, the touch sensor 167 is achieved as an electrical capacitance touch sensor, a resistive touch sensor (pressure sensitive touch sensor), an ultrasonic touch sensor, or other touch sensors. As an example, an input surface of the touch sensor 167 is a part or whole of a display surface of the monitor 166. The touch sensor 167 may be used as an operation unit configured to accept an input operation by the user. For example, when the operation unit is the touch sensor 167, the processor 110 accepts a physical contact operation by the user on an input surface of the touch sensor 167 as the input operation by the user. For example, the input operation by the user on the touch sensor 167 may include a touch operation, a slide operation, a swipe operation, a tap operation, and operations in other forms.

The operation unit is not limited to the above described configuration. For example, when the operation unit is the communication IF 140, the processor 110 accepts a signal sent from an operation device (not illustrated) connected via the network 90 as the input operation by the user. For example, when the operation unit is the input and output IF 150, the processor 110 accepts a signal sent from the external input and output device 190 as the input operation by the user. For example, in a case where the input and output device 190 is a camera and a ranging sensor, when a hand of the user is detected from a captured image received therefrom, the processor 110 accepts a gesture (a series of movements of the hand of the user) which is detected based on the captured image and an output value as the input operation by the user. For example, when the input and output device 190 is a controller, the processor 110 accepts an output value sent from the controller as the input operation by the user.

### Hardware configuration of server

The server 200 may be a workstation or a general use computer such as a PC. The server 200 includes a processor 210, a memory 220, a storage 230, a communication IF 240, and an input and output IF 250. Each of the plurality of components included the server 200 is connected to a communication bus 280.

The processor 210 executes a series of instructions included in a program stored in the memory 220 or the storage 230 according to a signal supplied to the server 200 or according to a state where a predetermined condition is satisfied. For example, the processor 210 is achieved as a CPU, a GPU, an MPU, an FPGA, or other computing devices.

The memory 220 temporarily saves a program and data. As an example, the program is read from the storage 230. The data may include data sent to the server 200 and data generated by the processor 210. For example, the memory 220 is achieved as a RAM or other volatile memories.

The storage 230 permanently stores a program and data. For example, the storage 130 is achieved as a ROM, a hard disc device, a flash memory, or other non-volatile storage devices. The storage 230 may be achieved as a detachable storage device like a memory card. The server 200 may use a program stored in an external storage device instead of the storage 230. For example, update of the program and data can be performed at once in a setting where a plurality of gaming systems 10 is used as in an amusement facility.

The program stored in the storage 230 includes a game program, a distribution program, and a communication program. The game program achieves a function of providing a game space in the gaming system 10 and providing game play in which the game space is shared by a plurality of users. The distribution program achieves a function of distributing content to the viewing terminal 100B. The communication program achieves a function of communicating with other computers (for example, the distribution terminal 100A, the viewing terminal 100B, the participation terminal 100C, and the general terminal 100D). The program stored in the storage 230 may include an operating system, a simulation program, a user authentication program, and other programs. For example, the data stored in the storage 130 may include data for specifying the game space, and object data for various types of objects arranged in the game space.

The communication IF 240 is connected to the network 90. The communication IF 240 communicates with other computers (for example, the distribution terminal 100A, the viewing terminal 100B, the participation terminal 100C, and the general terminal 100D) which are connected to the network 90. For example, the communication IF 240 is achieved as a LAN or other wired communication IFs. For example, the communication IF 240 is achieved as Wi-Fi (registered trademark), Bluetooth (registered trademark), NFC, or other wireless communication IFs. The communication IF 240 is not limited to the above described configuration.

The input and output IF 250 communicates with an external input and output device. For example, the input and output IF 250 is achieved as a USB, a DVI, an HDMI, or other wired communication IFs. For example, the input and output IF 250 is achieved as Bluetooth (registered trademark) or other wireless communication IFs.

The server 200 is not limited to the above described configuration. For example, the server 200 may include a game server 200A which provides the game space, and a distribution server 200B which executes distribution of the content. The game program is stored in the storage 230 of the game server 200A. The game program is executed by the processor 210 of the game server 200A. The distribution program is stored in the storage 230 of the distribution server 200B. The distribution program is executed by the processor 210 of the distribution server 200B. The game server 200A sends and receives various types of information and various types of requests to and from the distribution server 200B via the communication IF 240. The game server 200A sends and receives various types of information and various types of requests to and from the distribution terminal 100A, the participation terminal 100C, and the general terminal 100D via the communication IF 240. The distribution server 200B sends and receives various types of information and various types of requests to and from the viewing terminal 100B via the communication IF 240.

### Module configuration of terminal

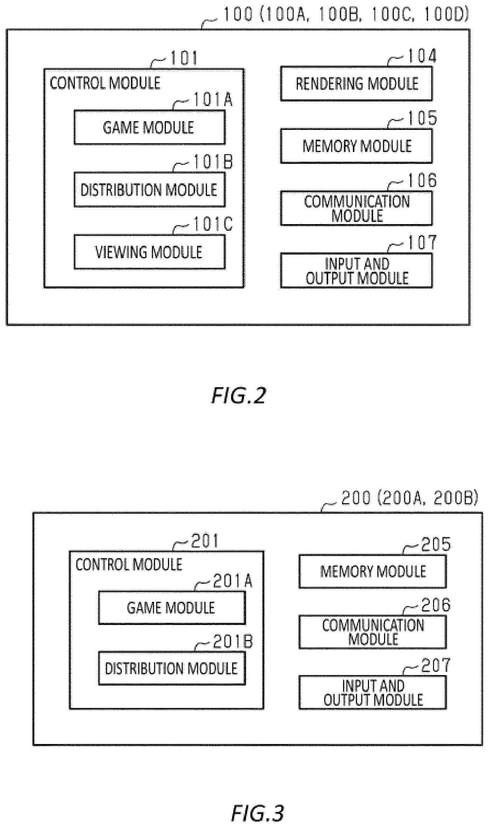

As illustrated in Fig. 2, the terminal 100 includes a control module 101, a rendering module 104, a memory module 105, a communication module 106, and an input and output module 107. The control module 101 includes a game module 101A, a distribution module 101B, and a viewing module 101C.

The game module 101A, the distribution module 101B, the viewing module 101C, and the rendering module 104 are achieved by the processor 110. The memory module 105 is achieved by the memory 120 and the storage 130. The communication module 106 is achieved by the communication IF 140. The input and output module 107 is achieved by the processor 110, the touch sensor 167, and the input and output IF 150.

The input and output module 107 senses an input operation by the user on the touch sensor 167 and an input operation by the user on an external operation device via the input and output IF 150, and accepts the input operations. As an example, when an input operation by the user on the touch sensor 167 is accepted, the input and output module 107 detects coordinates of an input position, and identifies a type of the input operation. For example, types of the input operation which can be identified by the input and output module 107 may include a touch operation, a slide operation, a swipe operation, a tap operation, and operations in other forms. When the input operation continuously sensed is interrupted, the input and output module 107 senses that a contact input is released from the touch sensor 167.

The communication module 106 receives various types of data and various types of requests from one or more servers 200. As an example, the data received by the communication module 106 from the server 200 may include progression information and user information. The progression information may include a type of one or more avatars arranged in the game space, coordinate information of the avatar, action information of the avatar, and other information. The avatar is an object set as a target to be operated by the user in the game space, and is a character serving as an alter ego of the user themselves. As an example, the coordinate information of the avatar is information indicating a position in the game space. As an example, the action information is information related to an action of the avatar. As an example, the action of the avatar may include a posture of the avatar, use of an item, use of a skill, an attack, a defense, an escape, a jump, or the like. The progression information may include configuration information related to a configuration of the avatar. As an example, the user may change the configuration of the avatar in a game space or in a previous stage before moving to the game space. As an example, the configuration of the avatar may include equipment, an appearance, or the like of the avatar. As an example, the user information may include a username, an account ID, a gender, an age, an address, and the like.

The communication module 106 sends various types of data and various types of request to one or more servers 200. As an example, the data sent by the communication module 106 to the server 200 may include play information and the user information. The play information is output according to an input operation accepted by the input and output module 107. As an example, the play information may include the coordinate information and the action information of the avatar, and other information as operation specifics of the avatar. As an example, the play information may include the configuration information of the avatar. As an example, the play information is generated by the game module 101A.

The game module 101A executes processing for progression of the game. The game module 101A reads definition data of the game space from the memory module 105. The game module 101A defines the game space according to the read definition data. The game module 101A reads object data from the memory module 105. The game module 101A arranges an object in the game space according to the read object data. The game module 101A identifies an instruction of the user according to coordinates of an input position accepted by the input and output module 107, a type of the input operation, and a running progress of the game. The running progress of the game may include coordinate information of its own avatar and action information in the game space. The running progress of the game may include coordinate information of an avatar of another user and action information. The running progress of the game may include include configuration information of its own avatar. The running progress of the game may include include configuration information of an avatar of another user. The game module 101A executes various types of determinations related to the progression of the game. The game module 101A executes various types of drawings, or lotteries, related to the progression of the game. The game module 101A generates various types of requests and play information according to an instruction of the user, results of the various types of determinations, results of the various types of drawings. The various types of requests and the play information which are generated by the game module 101A are sent by the communication module 106 to the server 200.

The distribution module 101B executes processing of distributing content including the game play. The distribution module 101B identifies an instruction of the user according to the coordinates of the input position accepted by the input and output module 107, the type of the input operation, and the running progress of the game. The distribution module 101B may generate a distribution start request and a distribution end request of the content according to the instruction specifics of the user. The distribution module 101B may generate a request for changing distribution specifics of the content according to the instruction of the user. The various types of requests generated by the distribution module 101B are sent by the communication module 106.

The viewing module 101C executes processing of viewing the content distributed by the distribution user. The viewing module 101C reads definition data of the viewing space form the memory module 105. The viewing module 101C defines the viewing space according to the read definition data. The viewing module 101C reads object data from the memory module 105. The viewing module 101C arranges an object in the viewing space according to the read object data. The viewing module 101C identifies an instruction of the user according to the coordinates of the input position accepted by the input and output module 107, the type of the input operation, and the running progress of the game. The viewing module 101C generates a viewing start request and a viewing end request of the content according to the instruction of the user. The viewing module 101C generates a request for changing the distribution specifics of the content according to the instruction of the user. The various types of requests generated by the viewing module 101C are sent by the communication module 106.

The rendering module 104 creates an image of a game screen. The rendering module 104 creates the image of the game screen according to the progression information received by the communication module 106 and various types of requests. The rendering module 104 creates the image of the game screen according to the play information generated by the game module 101A and various types of requests. The rendering module 104 creates the image of the game screen according to the information generated by the viewing module 101C and various types of requests.

The rendering module 104 displays the created image of the game screen on the monitor 166. The rendering module 104 may be configured to display the image of the game screen on an external display device via the input and output IF 150. The rendering module 104 may be configured to display the image of the game screen on an external display device via the communication IF 140. The game screen is an image obtained by controlling and plotting a 2D or 3D object. As described above, the object to be plotted on the game screen may include an avatar (character), a background, an obstacle, or the like.

The rendering module 104 may control and plot a 2D or 3D game object (Ul object) for constructing a UI (User Interface). The rendering module 104 creates a game screen including UI objects required for the input operation by the user such as an icon, a button, a list, a window, and a menu. The UI object is information for assisting the input operation by the user which is required for the progression of the game. In addition, the UI object is information for assisting the input operation by the user which is required for acquiring data generated in the progression of the game from the terminal 100. Any of various types of UI objects illustrated in the present disclosure is merely an example and is not limited to those forms.

Processing in the terminal 100 is achieved by hardware and software which is executed by the processor 110. Such software may be prestored in the memory module 105 such as a hard disk. The software may be stored in a non-volatile data recording medium which can be read by a computer as in a CD-ROM or the like, and may be distributed as a program product. This software may be provided as a program product which can be downloaded by an information service enterprise connected to a network such as the Internet. Such software is read by a data reading device such as an optical disc drive device from the data recording medium or download from another computer such as the server 200 via the communication module 106, and is then temporarily stored in the memory module. The software is read by the processor 110 from the memory module, and stored in a RAM or the like in an executable program form. The processor 110 executes the program.

### Module configuration of server

As illustrated in Fig. 3, the server 200 includes a control module 201, a memory module 205, a communication module 206, and an input and output module 207. The control module 201 includes a game module 201A and a distribution module 201B. The game module 201A and the distribution module 201B are achieved by the processor 210. The memory module 205 is achieved by the memory 220 and the storage 230. The communication module 206 is achieved by the communication IF 240. The input and output module 207 is achieved by the processor 210 and the input and output IF 250.

The communication module 206 receives various types of information and various types of requests from each of the terminals 100. As an example, the information received by the communication module 206 from the terminal 100 may include the play information and the user information. The communication module 206 sends various types of information and various types of requests to each of the terminals 100. As an example, the information sent by the communication module 206 to each of the terminals 100 may include the progression information and the user information. The input and output module 107 senses an input operation by the user on an external operation device via the input and output IF 250 and accepts the input operation.

The game module 201A executes processing of providing an environment in which the game space that is an example of the virtual space is to be shared by a plurality of users. The game module 201A reads definition data of the game space from the memory module 205. The game module 201A defines the game space according to the read definition data. The game module 201A reads object data from the memory module 205. The game module 201A arranges various types of objects, except for an avatar of a player who participates in the game, in the game space according to the read object data.

The game module 201A arranges the avatar of each of a plurality of players according to coordinate information included in the play information received by the communication module 206 from the plurality of terminals 100. The game module 201A determines an interaction of mutual avatars according to the action information included in the play information received by the communication module 206 from the plurality of terminals 100 and the configuration information of the avatars. The game module 201A generates progression information according to these processing results. The progression information is sent by the communication module 206 to each of the terminals 100 (100A, 100C, and 100D). The game module 201A sends the generated progression information to the distribution module 201B.

The distribution module 201B generates distribution information according to the progression information generated by the game module 201A. The distribution information is sent by the communication module 206 to one or more terminals 100 (100B). The distribution information may include the progression information. As an example, the distribution information may be the progression information as it is. According to the various types of requests received by the communication module 206 from the viewing terminal 100B, the distribution module 201B sends the various types of requests to the game module 201A. According to the various types of information received by the communication module 206 from the viewing terminal 100B, the distribution module 201B sends the various types of information to the game module 201A.

The server 200 is not limited to the above described module configuration. For example, the game module 201A may be included in the game server 200A. For example, the distribution module 201B may be included in the distribution server 200B. The game module 201A executes sending and receiving of the various types of information and the various types of requests to and from the distribution module 201B via the communication module 206.

The processing in the server 200 is achieved by hardware and software which is executed by the processor 210. Such software may be prestored in the memory module 205 such as a hard disk. The software may be stored in a non-volatile data recording medium which can be read by a computer as in a CD-ROM or the like, and may be distributed as a program product. This software may be provided as a program product which can be downloaded by an information service enterprise connected to a network such as the Internet. Such software is read by a data reading device such as an optical disc drive device from the data recording medium or download from another computer such as the external storage device via the communication module 206, and is then temporarily stored in the memory module. The software is read by the processor 210 from the memory module, and stored in a memory such as a RAM in an executable program form. The processor 210 executes the program.

### Overview of game

As an example, the game includes a plurality of parts different in nature. As an example, the plurality of parts includes a first part and a second part. In the first part, the distribution user, the participation user, and the general user may execute a preparation for the second part. In the first part, the viewing user may view content distributed by the distribution user. The distributed content includes the game play in the first part or the second part.

As an example, the second part is a part in which victory or defeat is decided by a plurality of users based on some criteria. As an example, the second part is a part in which the victory or defeat is decided by the plurality of parties based on some criteria. Each of the parties may respectively include a plurality of users. An entity to which the plurality of users belongs is not limited to a party, but may be a group, a team, a pair, or the like. As an example, the distribution user and the participation user may belong to a single party. In the second part, each of the distribution user, the participation user, and the general user operates its own avatar.

As an example, the second part of the game has the following specification. The second part is a battle game including a battle between two parties. In the second part, a plurality of users operates their respective avatars in a field constructed in the game space. In the second part, a criterion for deciding the victory or defeat is that a predetermined winning condition is to be established by one party earlier than a rival opponent party. The winning condition includes wipeout of members belonging to the opponent party.

The second part ends when a predetermined time limit has passed even without the wipeout of the members belonging to the opponent party. The winning condition includes a state where one party has acquired more points than the rival opponent party at a time point at which the time limit of the second part has passed. In the second part, a point can be acquired by collecting a specified object arranged in the game space. In the second part, an upper limit is set for the number of people who can belong to one party as the members. As an example, the upper limit of people for one party is six people. The upper limit of people for one party may be two to five people, or may be seven people or more. As an example, a small group formed in another part and a small group formed by mutual people in a relationship of friends or the like are allowed to belong to the party in the second part. The party with the upper limit of six people may be formed by a combination of a group of two, a group of three, and an individual player, or the party in the second part to which six individual players belong may be formed. For an invitation of the party in the second part, individual players may be invited, or small groups may be invited.

The second part is not limited to the above described configuration. For example, the second part may be a sport such as soccer, tennis, table tennis, boxing, or basketball. For example, the second part may be a race such as a car race, a yacht race, a ski race, or a flight race.

As an example, the first part has the following specification. In the first part, the distribution user, the participation user, and the general user execute a preparation for the battle game in the second part. The preparation for the battle game includes addition, exchange, and deletion of equipment of the avatar, a skill of the avatar, and a held item of the avatar. The preparation for the battle game may include change of an appearance of the avatar. For example, the appearance of the avatar includes a tribe, a gender, a body shape, a hair style, or an expression. The preparation for the battle game is to change the configuration of the avatar.

### Overview of screen transition in terminal

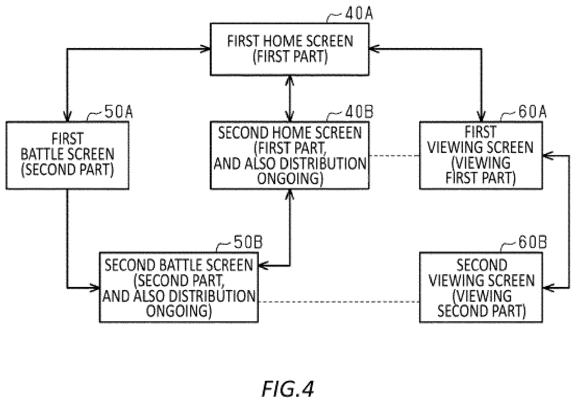

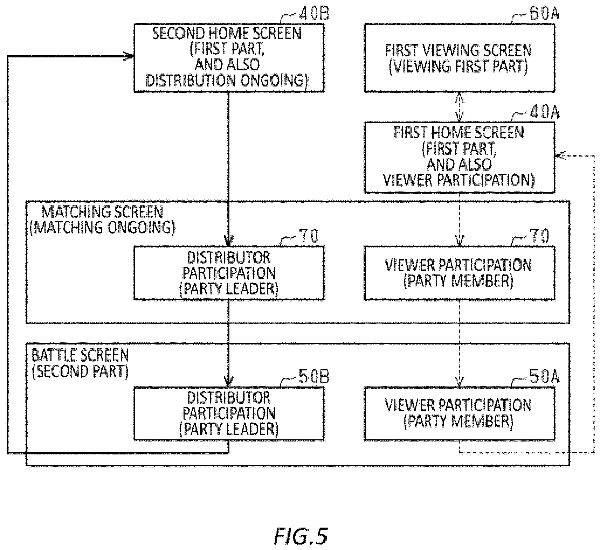

As illustrated in Fig. 4 and Fig. 5, as an example, the display screen in each of the terminals 100 may include a first home screen 40A, a second home screen 40B, a first battle screen 50A, a second battle screen 50B, a first viewing screen 60A, a second viewing screen 60B, and a matching screen 70. Here, an overview of screen transition will be described. A specific example of each of the display screens will be described below.

The first home screen 40A is displayed when the game is in the first part and the terminal 100 is in an initial state. The initial state is not a distribution state or a viewing state. In this initial state, the terminal 100 does not serve as the distribution terminal 100A and also does not serve as the viewing terminal 100B. That is, this terminal 100 is the general terminal 100D. In a case of the distribution state, the terminal 100 serves as the distribution terminal 100A. In the case of the distribution state, the terminal 100 does not serve as the viewing terminal 100B. In a case of the viewing state, the terminal 100 serves as the viewing terminal 100B. In the case of the viewing state, the terminal 100 does not serve as the distribution terminal 100A.

The second home screen 40B is displayed when the game is in the first part and the terminal 100 is in the distribution state. The first battle screen 50A is displayed when the game is in the second part and the terminal 100 is not in any of the distribution state and the viewing state. The second battle screen 50B is displayed when the game is in the second part and the terminal 100 is in the distribution state.

The first viewing screen 60A and the second viewing screen 60B are displayed when the terminal 100 is in the viewing state. The first viewing screen 60A is displayed when the game in the distribution terminal 100A which distributes content that is set as a viewing target is in the first part. That is, the game play in the first part can be viewed on the first viewing screen 60A. The second viewing screen 60B is displayed when the game in the distribution terminal 100A which distributes the content that is set as the viewing target is in the second part. That is, the game play in the second part can be viewed on the second viewing screen 60B. The matching screen 70 is displayed at the time of transfer from the first part to the second part.

### Data structure

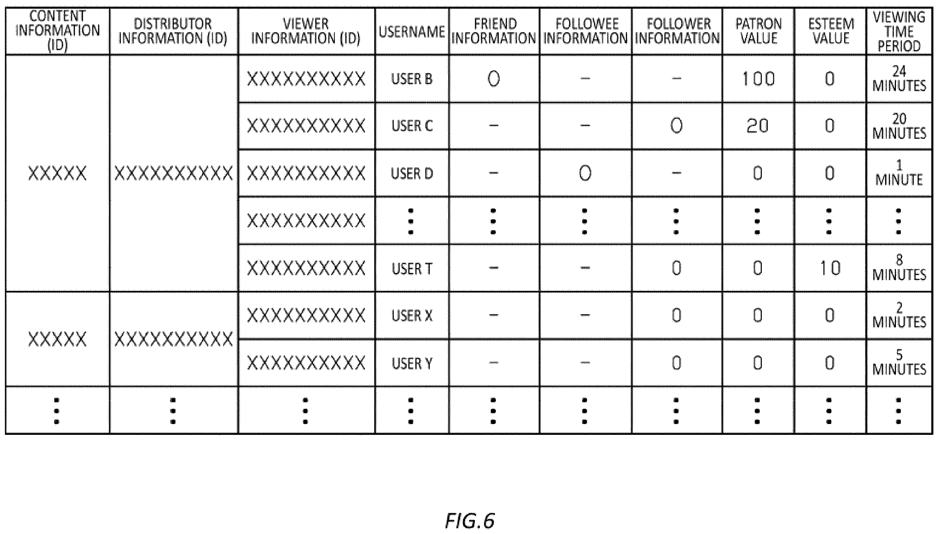

As illustrated in Fig. 6, the memory 220 and the storage 230 in the server 200 store history information relevant to the viewing user as the memory module 205. As an example, the history information has the following data structure.

Distributor information (distribution user ID) indicating the distribution user is associated with content information (content ID) indicating the content. Viewer information (viewing user ID) indicating the viewing user is associated with the content information. Various types of information indicating properties of the viewing user are associated with the viewer information. As an example, these various types of information include friend information, followee information, follower information, patron information, an esteem value, and viewing time period.

The friend information is a parameter indicating whether the distribution user registers the viewing user as a friend. The followee information is a parameter indicating whether the distribution user follows the viewing user. The follower information is a parameter indicating whether the distribution user is being followed by the viewing user. The patron information is a parameter indicating an evaluation value of a gift accepted by the distribution user from the viewing user. As an example, the evaluation value of the gift is the number of times the distribution user has accepted a gift from the viewing user. As an example, the evaluation value of the gift is the number of gifts accepted by the distribution user from the viewing user. As an example, the evaluation value of the gift is a total amount of an in-game currency required to purchase a gift accepted by the distribution user from the viewing user. As an example, the esteem value is a parameter indicating a manner of the viewing user. The viewing time period is a parameter indicating an elapsed time period since the start of the viewing of the content by the viewing user.

### Flow of distribution processing and viewing processing

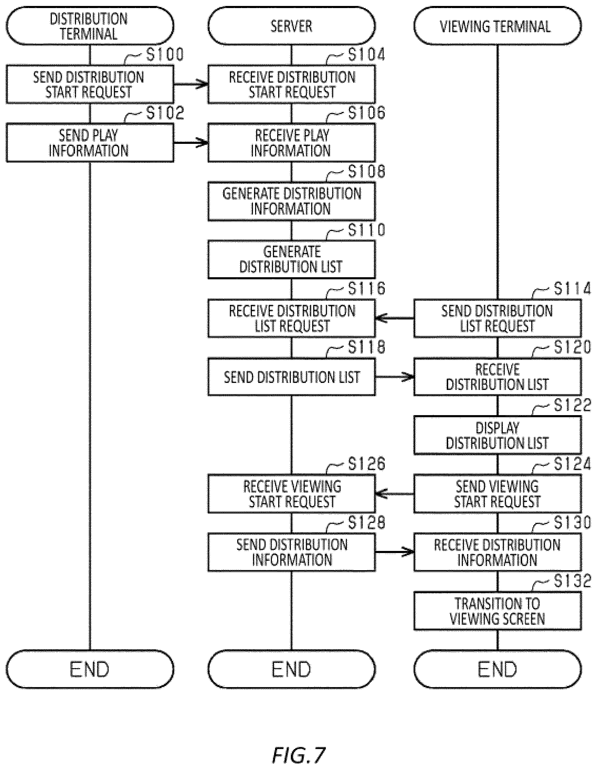

Hereinafter, a flow of distribution processing and viewing processing will be described. As illustrated in Fig. 7, in step S100, when an operation of instructing distribution start is accepted, the processor 110 of the distribution terminal 100A sends a distribution start request to the server 200 as the distribution module 101B.

In step S102, the processor 110 of the distribution terminal 100A sends the play information to the server 200 as the game module 101A. When the game is in the first part, the play information may include configuration information of the avatar. When the game is in the second part, the play information may include the coordinate information of the avatar, the action information, the configuration information of the avatar, and other information.

In step S104, the processor 210 of the server 200 receives the distribution start request as the distribution module 201B. In step S106, the processor 210 of the server 200 receives the play information as the game module 201A. That is, the server 200 receives, from the distribution terminal 100, the play information according to the game play executed by the distribution user in the distribution terminal 100A.

In step S108, the processor 210 of the server 200 generates the distribution information as the distribution module 201B. In step S110, the processor 210 of the server 200 generates a distribution list as the distribution module 201B. As an example, the distribution list is a list of content being distributed. As an example, the distribution list may be a list of the distribution user who is currently distributing the content.

In step S114, when a list display operation of instructing display of the distribution list is accepted, the processor 110 of the viewing terminal 100B sends a distribution list request to the server 200 as the viewing module 101C.

In step S116, the processor 210 of the server 200 receives the distribution list request as the distribution module 201B. In step S118, the processor 210 of the server 200 sends the distribution list to the viewing terminal 100B as the distribution module 201B.

In step S120, the processor 110 of the viewing terminal 100B receives the distribution list as the viewing module 101C. In step S122, the processor 110 of the viewing terminal 100B displays the distribution list on the monitor 166 as the rendering module 104.

In step S124, when a distribution start operation of specifying content the viewing of which is started is accepted, the processor 110 of the viewing terminal 100B sends the viewing start request to the server 200 as the viewing module 101C. As an example, the viewing start request indicates the content the distribution of which is requested to the viewing terminal 100B.

In step S126, the processor 210 of the server 200 receives the viewing start request as the distribution module 201B. In step S128, the processor 210 of the server 200 sends the distribution information to the viewing terminal 100B as the distribution module 201B. That is, the server 200 sends the distribution information according to the received play information to one or more viewing terminals 100B. The server 200 allows the viewing user using the one or more viewing terminals 100B to view the content including at least the game play by the distribution user.

In step S130, the processor 110 of the viewing terminal 100B receives the distribution information as the viewing module 101C. In step S132, the processor 110 of the viewing terminal 100B displays a viewing screen including the content according to the distribution information on the monitor 166 as the rendering module 104. When the distribution terminal 100A is distributing the first part of the game, the processor 110 displays the first viewing screen 60A on the monitor 166. When the distribution terminal 100A is distributing the second part of the game, the processor 110 displays the second viewing screen 60B on the monitor 166.

### Party member invitation processing

Hereinafter, a flow of party member invitation processing will be described. As a premise, the content including the game play in the first part is distributed from the distribution terminal 100A to the viewing terminal 100B. The second home screen 40B is displayed on the monitor 166 of the distribution terminal 100A. The first viewing screen 60A is displayed on the monitor 166 of the viewing terminal 100B.

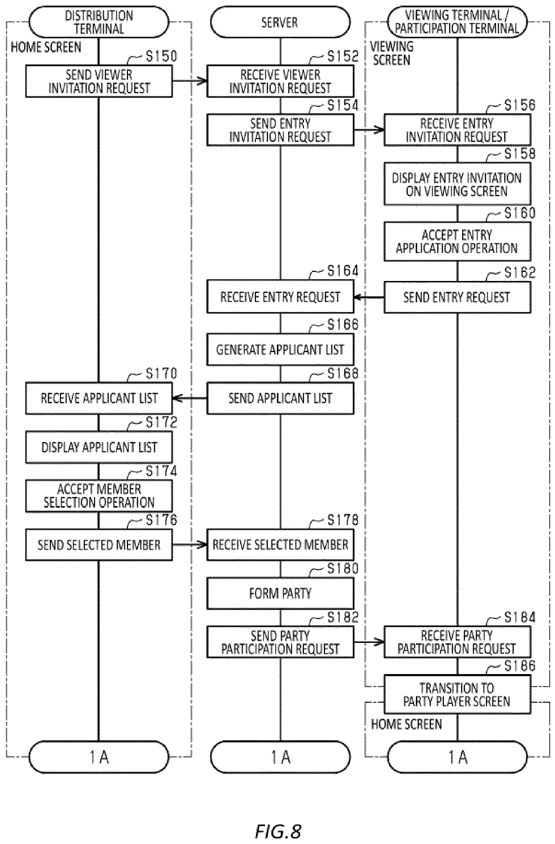

As illustrated in Fig. 8, in step S150, when an invitation operation of instructing participation invitation to the party for the viewer is accepted, the processor 110 of the distribution terminal 100A sends a viewer invitation request to the server 200 as the game module 101A.

In step S152, the processor 210 of the server 200 receives the viewer invitation request as the distribution module 201B. That is, the server 200 receives the viewer invitation request sent by the distribution terminal 100A which has accepted the invitation operation performed by the distribution user. The viewer invitation request is an example of invitation information.

In step S154, the processor 210 of the server 200 sends an entry invitation request to one or more viewing terminals 100B as the distribution module 201B. That is, when the viewer invitation request is received, the server 200 sends the entry invitation request to the viewing terminal 100B. The entry invitation request is an example of calling information. The entry invitation request is sent to all the viewing terminals 100B receiving the distribution of the content from a certain distribution terminal 100A. The entry invitation request is not sent to other viewing terminals 100B which do not receive the distribution of the content from the distribution terminal 100A. The calling for the participation by the distribution user is only performed for the viewing user who is viewing the content of the distribution user.

In step S156, the processor 110 of the viewing terminal 100B receives the entry invitation request as the viewing module 101C. In step S158, the processor 110 of the viewing terminal 100B displays the first viewing screen 60A including a notification calling for the participation in the content as the player on the monitor 166 as the rendering module 104. That is, as an example, the server 200 instructs the one or more viewing terminals 100B to perform the notification calling for the participation in the content as the player.

In step S160, the processor 110 of the viewing terminal 100B accepts an entry application operation of instructing participation in the content as the player as the viewing module 101C. The entry application operation is an example of a participation operation of instructing participation in the party invited by the distribution user. In step S162, the processor 110 of the viewing terminal 100B sends an entry request to the server 200 as the viewing module 101C.

In step S164, the processor 210 of the server 200 receives the entry request as the distribution module 201B. That is, as an example, the server 200 receives participation information sent by the viewing terminal 100B which has accepted the participation operation by the viewing user among the one or more viewing terminals 100B. The entry request is an example of the participation information.

In step S166, the processor 210 of the server 200 generates an applicant list as the game module 201A. When the applicant list includes a plurality of viewing users, the processor 210 sorts the viewing users according to the history information stored in the memory module 105. The sorting of the viewing users is performed according to various types of information included in the history information. As an example, contribution rates or priority ranks are set in the various types of information included in the history information. As an example, the processor 210 sorts the plurality of viewing users by setting the contribution rates of the friend information, the patron information, and the esteem value to be higher than the contribution rates of other information.

That is, as an example, when the viewing terminal 100B which has received the participation information includes a plurality of viewing terminals, the server 200 generates a list of the viewing users using the respective viewing terminals 100B. As an example, the generation of the applicant list includes sorting an order in the list according to the history information relevant to the viewing users using the viewing terminals 100B which have received the participation information. As an example, the history information includes a content viewing time period in the viewing terminals 100B which have received the participation information.

In step S168, the processor 210 of the server 200 sends the generated applicant list to the distribution terminal 100A as the game module 201A. That is, as an example, the server 200 sends the generated list to the viewing terminal 100B.

In step S170, the processor 110 of the distribution terminal 100A receives the applicant list as the game module 101A. In step S172, the processor 110 of the distribution terminal 100A displays the second home screen 40B including the applicant list on the monitor 166 as the rendering module 104.

In step S174, the processor 110 of the distribution terminal 100A accepts a member selection operation of instructing viewing user selected from the applicant list as the game module 101A. In step S176, the processor 110 of the distribution terminal 100A sends a selected member who is the viewing user selected according to the member selection operation to the server 200 as the game module 101A.

In step S178, the processor 210 of the server 200 receives the selected member as the game module 201A. In step S180, the processor 210 of the server 200 forms a party as the game module 201A. As an example, the processor 210 forms the party by designating a distribution user as a leader. As an example, the party formed in step S180 includes the distribution user. As an example, the party formed in step S180 further includes a viewing user selected by the distribution user from an application list. The selected viewing user is to participate in the content distributed by the distribution user as the participation user who is a player. That is, as an example, the server 200 forms the party including at least the distribution user and the viewing user using the viewing terminal 100B which has received the participation information.

In step S182, the processor 210 of the server 200 sends a party participation request to the viewing terminal 100B used by the viewing user selected by the distribution user as the game module 201A. The party participation request is an example of a request for instructing the participation in the content distributed by the distribution user. That is, as an example, the server 200 causes one or or more viewing users included in the formed party to participate in the content as the player.

In step S184, the processor 110 of the viewing terminal 100B receives the party participation request as the game module 101A. Thus, the viewing terminal 100B turns into the participation terminal 100C. In step S186, the processor 110 of the participation terminal 100C displays the first home screen 40A instead of the first viewing screen 60A on the monitor 166 as the rendering module 104.

### Flow of matching processing, battle processing, and disbanding processing

Hereinafter, a flow of matching processing, battle processing, and disbanding processing will be described. As a premise, members at the upper limit of people including the participation user belong to the party to which the distribution user belongs.

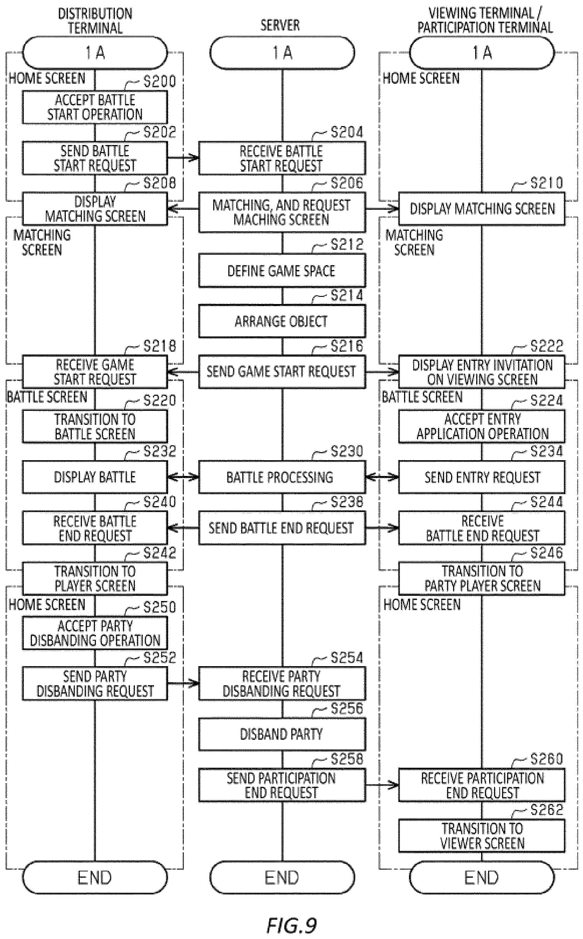

As illustrated in Fig. 9, in step S200, the processor 110 of the distribution terminal 100A accepts a battle start operation of instructing start of the second part as the game module 101A. In step S202, the processor 110 of the distribution terminal 100A sends a battle start request to the server 200 as the game module 101A.

In step S204, the processor 210 of the server 200 receives the battle start request as the game module 101A. In step S206, the processor 210 of the server 200 performs matching of an opponent party playing against the party to which the distribution user belongs as the game module 201A. The processor 210 sends a matching screen request to the distribution terminal 100A and the participation terminal 100C as the game module 201A. In response to this, the processor 210 sends a standby screen request according to the matching screen request to the viewing terminal 100B as the distribution module 201B.

In step S208, the processor 110 of the distribution terminal 100A receives the matching screen request, and displays the matching screen 70 on the monitor 166 according to the received matching screen request as the rendering module 104. In step S210, the processor 110 of the participation terminal 100C receives the matching screen request, and displays the matching screen 70 according to the received matching screen request on the monitor 166 as the rendering module 104. On the other hand, the processor 110 of the viewing terminal 100B receives the standby screen request, and displays a predetermined standby screen according to the received standby screen request on the monitor 166 as the rendering module 104.

In step S212, when the matching is completed, the processor 210 of the server 200 defines the game space as the game module 201A. In step S214, the processor 210 of the server 200 arranges various types of objects in the game space as the game module 201A. The various types of objects include avatars of the party members including the distribution user and avatars of opponent party members. As an example, the various types of objects may include a common enemy character, an obstacle, or a trap.

In step S216, the processor 210 of the server 200 sends a game start request to the distribution terminal 100A and the participation terminal 100C as the game module 201A. In response to this, the processor 210 of the server 200 sends a first viewing transfer request according to the game start request to the viewing terminal 100B as the distribution module 201B.

In step S218, the processor 110 of the distribution terminal 100A receives the game start request as the game module 101A. In step S220, the processor 110 of the distribution terminal 100A displays the second battle screen 50B on the monitor 166 as the rendering module 104. That is, in the distribution terminal 100A, the game transfers from the first part to the second part.

In step S222, the processor 110 of the participation terminal 100C receives the game start request as the game module 101A. In step S224, the processor 110 of the participation terminal 100C displays the first battle screen 50A on the monitor 166 as the rendering module 104. That is, in the participation terminal 100C, the game transfers from the first part to the second part.

On the other hand, the processor 110 of the viewing terminal 100B receives the first viewing transfer request as the viewing module 101C. In response to this, the processor 110 of the viewing terminal 100B displays the second viewing screen 60B on the monitor 166 as the rendering module 104. That is, the content which can be viewed in the viewing terminal 100B transfers from the first part to the second part.

In step S230, the processor 210 of the server 200 executes the battle processing as the game module 201A. As an example, two parties participate in the second part of the game. A plurality of members belongs to each of the two parties playing against each other. The processor 210 may receive the play information from the plurality of terminals 100 respectively used by the plurality of members participating in the same second part. The processor 210 generates the progression information according to the play information received from these terminals 100. The processor 210 sends the generated progression information to the terminal 100. In response to this, the processor 210 of the server 200 generates the distribution information as the distribution module 201B according to the progression information generated as the game module 201A. The processor 210 sends the generated distribution information to the viewing terminal 100B.

In step S232, the processor 110 of the distribution terminal 100A receives the progression information as the game module 101A. The processor 110 displays the second battle screen 50B on the monitor 166 according to the received progression information as the rendering module 104. The processor 110 generates and sends the play information to the server 200.

In step S234, the processor 110 of the participation terminal 100C receives the progression information as the game module 101A. The processor 110 displays the first battle screen 50A on the monitor 166 according to the received progression information as the rendering module 104. The processor 110 generates and sends the play information to the server 200.

The processor 110 of the viewing terminal 100B receives the distribution information as the viewing module 101C. The processor 110 displays the second viewing screen 60B on the monitor 166 according to the received viewing information as the rendering module 104.

In step S238, when an ending condition of the second part is established, the processor 210 of the server 200 sends a battle end request to the distribution terminal 100A and the participation terminal 100C as the game module 201A. As an example, the ending condition of the second part is established when a certain party satisfies the winning condition before elapse of a time limit of the second part, or when the time limit of the second part has elapsed. In response to this, the processor 210 of the server 200 sends a second viewing transition request according to the battle end request to the viewing terminal 100B as the distribution module 201B.

In step S240, the processor 110 of the distribution terminal 100A receives the battle end request as the game module 101A. In step S242, the processor 110 of the distribution terminal 100A displays the second home screen 40B on the monitor 166 as the rendering module 104. That is, in the distribution terminal 100A, the game transfers from the second part to the first part.

In step S244, the processor 110 of the participation terminal 100C receives the battle end request as the game module 101A. In step S246, the processor 110 of the distribution terminal 100A displays the first home screen 40A on the monitor 166 as the rendering module 104. That is, in the participation terminal 100C, the game transfers from the second part to the first part.

The processor 110 of the viewing terminal 100B receives the second viewing transition request as the viewing module 101C. In response to this, the processor 110 of the viewing terminal 100B displays the first viewing screen 60A on the monitor 166 as the rendering module 104. That is, the content which can be viewed in the viewing terminal 100B transfers from the second part to the first part.

In step S250, the processor 110 of the distribution terminal 100A accepts a party disbanding operation of instructing disbanding of the party as the game module 201A. In step S252, the processor 110 of the distribution terminal 100A sends a party disbanding request to the server 200 as the game module 201A.

In step S254, the processor 210 of the server 200 receives the party disbanding request as the game module 201A. In step S256, the processor 210 of the server 200 disbands the party led by the distribution user as the game module 201A.

In step S258, the processor 210 of the server 200 sends a participation end request to the participation terminal 100C. In step S260, the processor 110 of the participation terminal 100C receives the participation end request as the game module 101A.

In step S262, the processor 110 of the viewing terminal 100B displays the first viewing screen 60A instead of the first home screen 40A on the monitor 166 as the rendering module 104. Thus, the participation terminal 100C turns into the viewing terminal 100B.

Example of display screen in terminal and flow of processing related to display

### First home screen

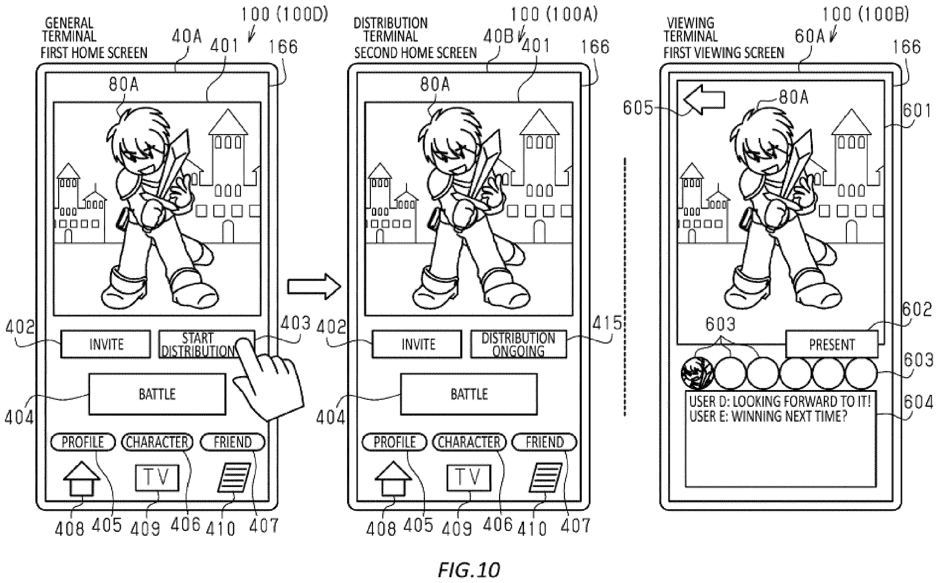

As illustrated in Fig. 10, in the first part, the first home screen 40A is displayed on the monitor 166 when the terminal 100 (the general terminal 100D) is in the initial state. The first home screen 40A may include various types of objects. As an example, the first home screen 40A may include an avatar window 401, an invitation icon 402, a distribution start icon 403, and a battle icon 404. The first home screen 40A may include a profile icon 405, a character icon 406, a friend icon 407, a home button 408, a viewing button 409, and a timeline button 410.

As an example, an avatar 80A of the distribution user is displayed in the avatar window 401. A look of the avatar 80A changes according to a change in a configuration of the avatar through the game play in the first part. As an example, an operation of instructing distribution start of the content can be executed by performing a tap operation on a section in which the distribution start icon 403 is displayed. As an example, the invitation operation can be executed by a series of operations including the tap operation on a section in which the invitation icon 402 is displayed. As an example, the battle start operation can be executed by performing the tap operation on a section in which the battle icon 404 is displayed. As an example, the list display operation of instructing display of the distribution list can be executed by performing the tap operation on a section in which the viewing button 409 is displayed.

As an example, an operation of instructing display of a preparation window (not illustrated) for preparing for the battle game may be executed by performing the tap operation on a section in which the character icon 406 is displayed. As an example, an operation of instructing display of a timeline screen 75 may be executed by performing the tap operation on a section in which the timeline button 410 is displayed.

### Second home screen

In the first part, when the terminal 100 (the distribution terminal 100A) is in the distribution state, the second home screen 40B is displayed on the monitor 166. The second home screen 40B includes a distribution ongoing icon 415 instead of the distribution start icon 403. The distribution ongoing icon 415 indicates that the second home screen 40B is currently distributed. As an example, a distribution end operation of instructing end of the content distribution can be executed by performing the tap operation on a section in which the distribution ongoing icon 415 is displayed.

### First viewing screen

When the game in the distribution terminal 100A is in the first part, the first viewing screen 60A is displayed on the monitor 166 of the viewing terminal 100B.
The first viewing screen 60A may include various types of objects. As an example, the first viewing screen 60A includes a viewing window 601. As an example, the first viewing screen 60A may include a present button 602, a member icon 603, a chat window 604, and a return button 605.

The avatar of the distribution user is displayed in the viewing window 601. As an example, when the avatar of the distribution user is the avatar 80A, the same avatar 80A is displayed in the viewing window 601. When a configuration of the avatar is changed according to the game play of the distribution user, the look of the avatar of the distribution user which is displayed in the viewing window 601 is changed according to the change to the configuration. That is, when the game is in the first part, the game play of the distribution user is displayed in the viewing window 601.

As an example, the member icon 603 may represent a member (participation user) of the party to which the distribution user belongs. As an example, text data sent to and received from the viewing user may be displayed in the chat window 604. As an example, the processor 110 of the viewing terminal 100B receives text data sent from another viewing terminal 100B via the server 200 and displays the received text data on the monitor 166 in a chronological order. As an example, the processor 110 of the viewing terminal 100B sends the text data specified by the input operation by the viewing user to another viewing terminal 100B via the server 200.

As an example, an operation of instructing provision of a gift to the distributor may be executed by performing the tap operation on a section in which the present button 602 is displayed. As an example, an operation of instructing returning to the distribution list screen may be executed by performing the tap operation on a section in which the return button 605 is displayed.

### Screen transition to first viewing screen

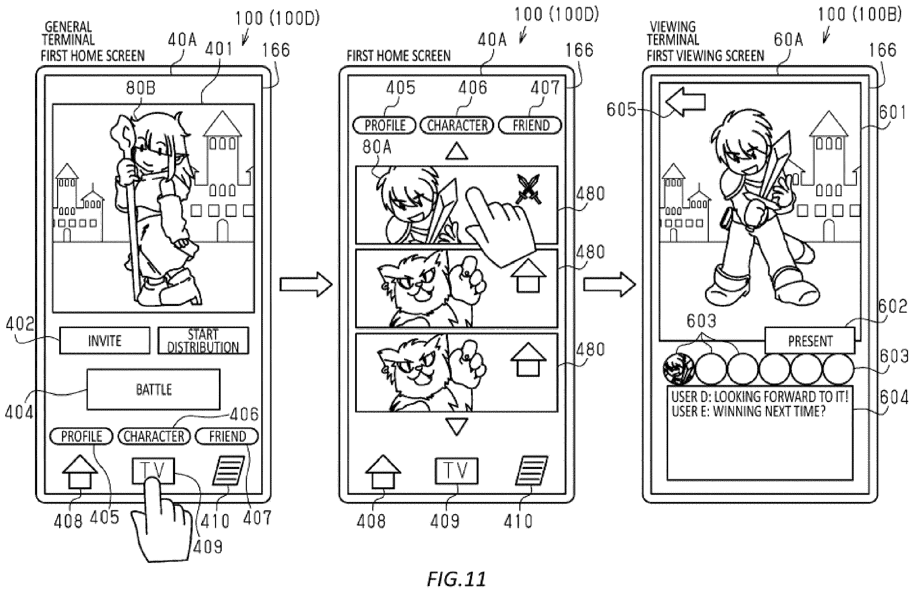

As illustrated in Fig. 11, when the first home screen 40A is displayed as a premise, the list display operation is executed by the tap operation on the viewing button 409. As described above, in step S122, the processor 110 of the viewing terminal 100B displays the distribution list on the monitor 166 as the rendering module 104. As an example, the distribution list is displayed by lining up a plurality of distribution panels 480. The plurality of distribution panels 480 includes information relevant to the distribution users who distribute the respectively corresponding content. As an example, the information relevant to the distribution user includes a username of the distribution user, an avatar of the distribution user, the number of viewing users who are viewing the content, a current part of the game.

The distribution start operation of specifying content the viewing of which is started can be executed by performing the tap operation on a section in which a certain distribution panel 480 is displayed. As described above, in step S132, the processor 110 of the viewing terminal 100B displays the first viewing screen 60A or the second viewing screen 60B on the monitor 166 according to the received distribution information.

### Screen transition when party member is invited

Screen transition when the distribution user invites a party member from the viewing users will be described.

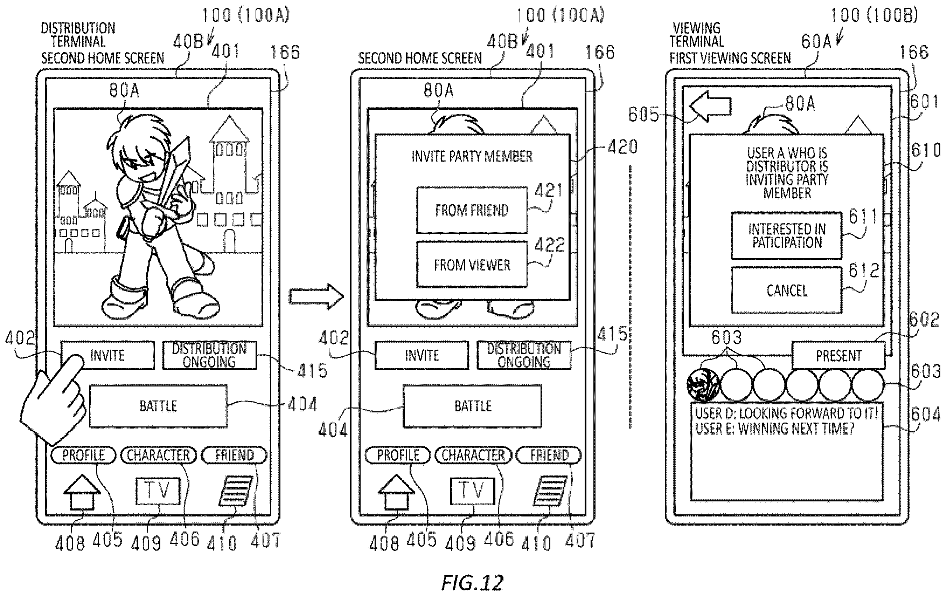

As illustrated in Fig. 12, as a premise, the tap operation on the invitation icon 402 is performed on the second home screen 40B of the distribution terminal 100A. When the tap operation on the invitation icon 402 is accepted, the processor 110 of the distribution terminal 100A displays an invitation window 420 on the monitor 166 as the rendering module 104. As an example, the invitation window 420 includes a first invitation button 421 and a second invitation button 422. As an example, an operation of instructing party member invitation from the user registered as a friend can be executed by performing the tap operation on a section in which the first invitation button 421 is displayed. As an example, the invitation operation can be executed by performing the tap operation on a section in which the second invitation button 422 is displayed. As described above, in step S150, the processor 110 of the distribution terminal 100A accepts the invitation operation. As an example, the invitation operation may be regarded as an instruction of inviting the party member from the viewing users of the content distributed by the distribution user.

In step S158 described above, the processor 110 of the viewing terminal 100B displays a selection window 610 on the monitor 166 as the rendering module 104. As an example, the selection window 610 includes text data indicating the invitation for the party member by the distribution user as an example of the notification calling for the participation in the content as the player. As an example, the selection window 610 includes a participation interest button 611 and a cancel button 612.

As an example, the entry application operation described above can be executed by performing the tap operation on a section in which the participation interest button 611 is displayed. As an example, an operation of instructing not to participate in the content as the player can be executed by performing the tap operation on a section in which the cancel button 612 is displayed.

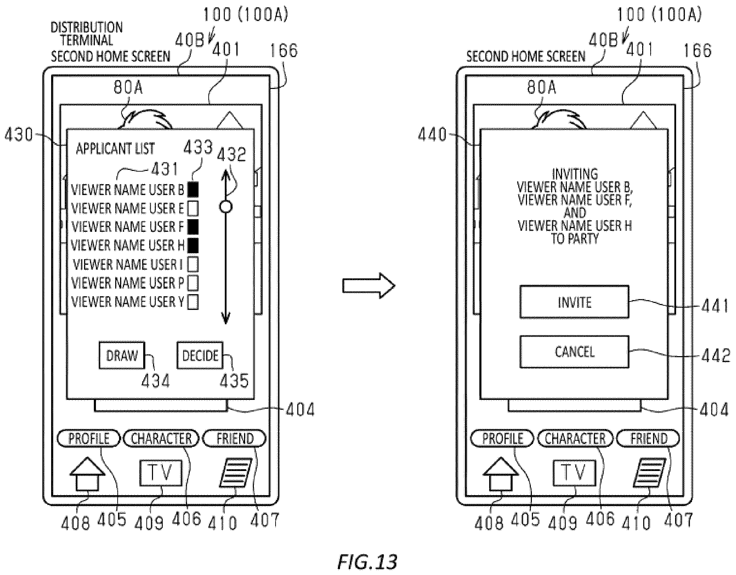

As illustrated in Fig. 13, in step S172 described above, the processor 110 of the distribution terminal 100A displays a member selection window 430 on the monitor 166 as the rendering module 104. As an example, the member selection window 430 includes an applicant list 431. As described above, in the applicant list, the viewing users interested in the participation are sorted in the order according to the history information.

As an example, the member selection window 430 includes a scrollbar 432, a selection checkbox 433, a drawing button 434, and a decision button 435. As an example, an operation of instructing change to a display range of the applicant list in the member selection window 430 can be executed by performing the slide operation on a section in which the scrollbar 432 is displayed.

As an example, an individual selection operation of preliminarily selecting participation members individually can be executed by performing the tap operation on a section in which the selection checkbox 433 is displayed. As an example, when the individual selection operation is accepted, the processor 110 of the distribution terminal 100A may preliminarily select the corresponding participation member as the game module 101A.

As an example, a drawing operation of instructing drawing of participation members can be executed by performing the tap operation on a section in which the drawing button 434 is displayed. As an example, when the drawing operation is accepted, the processor 110 of the distribution terminal 100A may preliminarily select the participation members from the viewing users included in the applicant list by executing the drawing as the game module 101A.

As an example, a selection end operation of instructing end of the selection of the participation members can be executed by performing the tap operation on a section in which the decision button 435 is displayed. When the selection end operation is accepted, the processor 110 of the distribution terminal 100A displays a selection confirmation window 440 on the monitor 166 as the rendering module 104.

As an example, the selection confirmation window 440 includes a list of the participation members preliminarily selected from the applicant list. The selection confirmation window 440 includes a confirmation button 441 and a cancel button 442. As an example, the member selection operation can be executed by performing the tap operation on a section in which the confirmation button 441 is displayed. As described above, in step S174, the processor 110 of the distribution terminal 100A accepts the member selection operation as the game module 101A.

As an example, a cancel operation can be executed by performing the tap operation on a section in which the cancel button 442 is displayed. As an example, when the cancel operation is accepted, the processor 110 of the distribution terminal 100A displays the member selection window 430 on the monitor 166 as the rendering module 104. That is, the monitor 166 returns to the screen for preliminarily selecting the participation members.

### Party participation confirmation

After a party is formed, the gaming system 10 may be configured to ask for final confirmation with regard to the participation in the party.

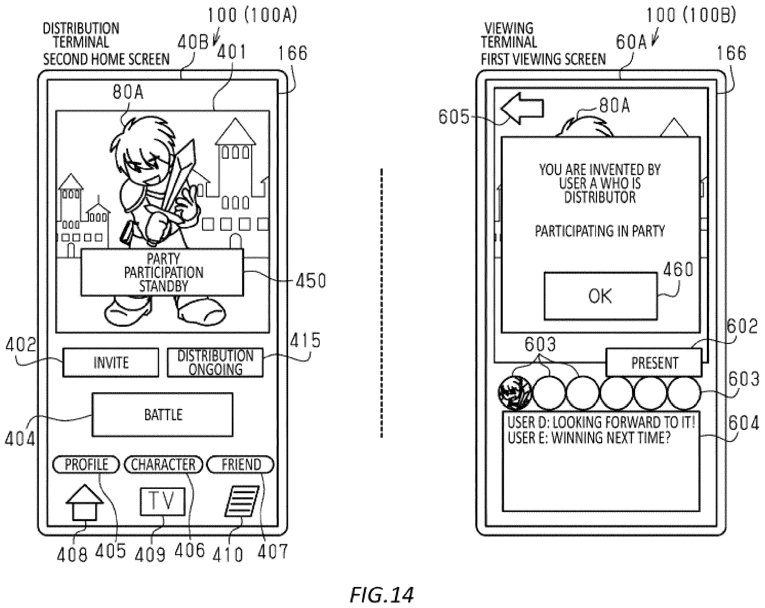

As illustrated in Fig. 14, when the member selection operation is accepted, the monitor 166 of the distribution terminal 100A may display a participation standby window 450. As an example, when the member selection operation is accepted, the processor 110 of the distribution terminal 100A displays the participation standby window 450 on the monitor 166 as the rendering module 104. When participation confirmation requests are received from all the participation users (the participation terminals 100C) through the server 200, the processor 110 of the distribution terminal 100A closes the participation standby window 450 from the monitor 166.

When the party participation request is received, the processor 110 of the participation terminal 100C may display a participation confirmation button 460 on the monitor 166 as the rendering module 104. As an example, an operation of instructing participation confirmation can be executed by performing the tap operation on a section in which the participation confirmation button 460 is displayed. As an example, when the operation of instructing participation confirmation is accepted, the processor 110 of the participation terminal 100C may send a participation confirmation request to the distribution terminal 100A through the server 200 as the game module 101A.

### Screen transition after party formation

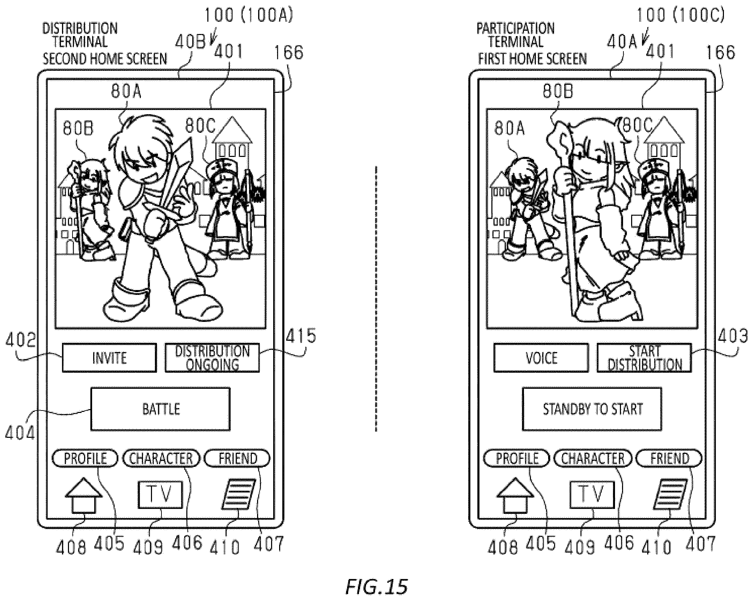

Screen transition after the party is formed will be described. As illustrated in Fig. 15, when the member selection operation is accepted, the processor 110 of the distribution terminal 100A closes the selection confirmation window 440 from the monitor 166 as the rendering module 104. In this situation, the processor 110 of the distribution terminal 100A also displays an avatar of a participation user in the avatar window 401 according to the progression information received from the server 200 as the rendering module 104. As an example, the avatar 80A of the distribution user and avatars 80B and 80C of the participation users are displayed in the avatar window 401.

As described above, in step S186, the processor 110 of the participation terminal 100C displays the first home screen 40A on the monitor 166 as the rendering module 104. In this situation, the processor 110 of the participation terminal 100C also displays the avatar of the distribution user and an avatar of another participation user in the avatar window 401 according to the progression information received from the server 200 as the rendering module 104. As an example, its own avatar 80B, the avatar 80C of another participation user, and the avatar 80A of the distribution user are displayed in the avatar window 401.

### Matching screen

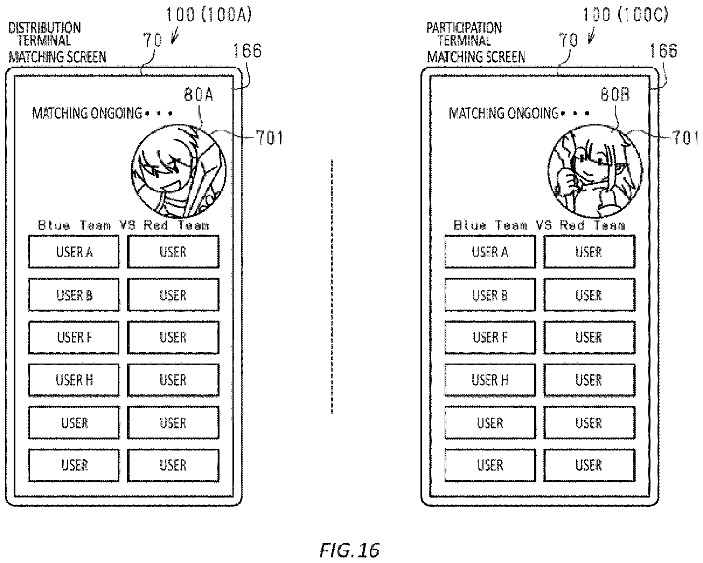

As illustrated in Fig. 16, after the party is formed, when the server 200 is executing matching with an opponent, the matching screen 70 is displayed on each of the monitor 166 of the distribution terminal 100A and the monitor 166 of the participation terminal 100C. The matching screen 70 may include various types of objects. The matching screen 70 includes an avatar window 701 in which the avatar of the user is displayed. The matching screen 70 includes information such as text data indicating that the matching is being executed.

### Battle screen

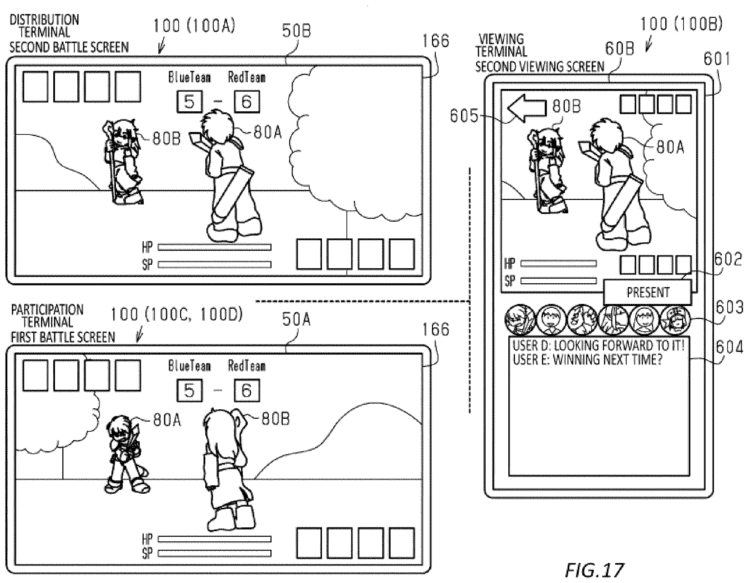

As illustrated in Fig. 17, when the game is in the second part and the terminals 100 (100C and 100D) are not in the distribution state, the first battle screen 50A is displayed on the monitor 166. When the game is in the second part and the terminal 100 (the distribution terminal 100A) is in the distribution state, the second battle screen 50B is displayed on the monitor 166.

The first battle screen 50A and the second battle screen 50B include various types of objects. As an example, each of the first battle screen 50A and the second battle screen 50B includes the avatar of the user themselves using the terminal 100. As an example, the battle screens 50A and 50B may include a point display field of the belonging party, a hit point bar indicating a hit point value, a skill bar indicating a skill point, a skill icon, and an item icon.

As an example, in step S232, the processor 110 of the distribution terminal 100A displays the avatar 80A of the distribution user themselves at the center of the monitor 166 as the rendering module 104. The processor 110 of the distribution terminal 100A arranges a virtual camera over the head in the rear of the avatar of the distribution user themselves in the game space, and a range fit within a visual field area of the virtual camera is displayed on the monitor 166. The processor 110 of the distribution terminal 100A arranges the avatars of the participation users and the avatars of the opponent party members in the game space according to the progression information received from the server 200 (the game module 201A). When the avatars of the participation user or other users are fit within the visual field area of the virtual camera, the processor 110 of the distribution terminal 100A may display those avatars on the monitor 166. When those avatars are displayed on the monitor 166, the avatars involve action according to the action information.

As an example, in step S234, the processor 110 of the participation terminal 100C displays the avatar 80B of the participation user themselves at the center of the monitor 166 as the rendering module 104. The processor 110 of the participation terminal 100C arranges a virtual camera over the head in the rear of the avatar of the participation user themselves in the game space, and a range within a visual field area of the virtual camera is displayed on the monitor 166. The processor 110 of the participation terminal 100C arranges the respective avatars of the distribution user, the participation users other than the user themselves, and the opponent party members in the game space according to the progression information received from the server 200 (the game module 201A). When the respective avatars of the distribution user, the participation users other than the user themselves, or the opponent party members are fit within the visual field area of the virtual camera, the processor 110 of the participation terminal 100C may display those avatars on the monitor 166. When those avatars are displayed on the monitor 166, the avatars involve action according to the action information.

The respective processors 110 in the distribution terminal 100A, the participation terminals 100C, and the general terminals 100D of the opponent party members each use the same definition data and define the game space. The respective processors 110 in the distribution terminal 100A, the participation terminals 100C, and the general terminals 100D of the opponent party members exchange the configuration information of the avatars, the coordinate information of the avatars, and the action information through the server 200. Then, the respective processors 110 in the distribution terminal 100A, the participation terminals 100C, and the general terminals 100D of the opponent party members arrange objects in the game space according to these pieces of information received through the server 200 and display the objects on the monitor 166. That is, the distribution terminal 100A, the participation terminals 100C, and the general terminals 100D of the opponent party members synchronize an event in the game space among these. Thus, it may be described that the distribution terminal 100A, the participation terminals 100C, and the general terminals 100D of the opponent party members share the single game space.

### Second viewing screen

When the game in the distribution terminal 100A which distributes the content is in the second part, the second viewing screen 60B is displayed on the monitor 166 of the viewing terminal 100B. As an example, the second viewing screen 60B includes a same object as that on the first viewing screen 60A. As an example, the second viewing screen 60B is a same image as the first viewing screen 60A.

The processor 110 of the viewing terminal 100B displays the avatar 80A of the distribution user at the center of the viewing window 601 as the rendering module 104. The processor 110 of the viewing terminal 100B arranges the respective avatars of the distribution user, the participation users, and the opponent party members in the viewing space according to the distribution information received from the server 200 (the distribution module 201B). The processor 110 of the viewing terminal 100B arranges a virtual camera over the head in the rear of the avatar of the distribution user themselves in the viewing space, and a range within a visual field area of the virtual camera is displayed on the monitor 166. When the avatars of the participation users or the opponent party members are fit within the visual field area of the virtual camera, the processor 110 of the viewing terminal 100B may display those avatars on the monitor 166. When those avatars are displayed on the monitor 166, the avatars involve action according to the action information. That is, a moving image that is the game play of the distribution user may be displayed in the viewing window 601.

As described above, the processor 110 of the viewing terminal 100B defines the viewing space by using the same definition data as the game space that is set as the viewing target. As in the progression information, the distribution information may include the position information of the avatars, the action information of the avatars, and the configuration information of the avatars. The processor 110 of the viewing terminal 100B receives the distribution information through the server 200. The processor 110 of the viewing terminal 100B arranges an object in the viewing space according to the distribution information, and displays the object on the monitor 166. That is, the processor 110 of the viewing terminal 100B replicates the game space that is the viewing target as the viewing space in real time. That is, it may be described that the distribution terminal 100A, the viewing terminal 100B, the participation terminal 100C, and the general terminal 100D of the opponent party member share the single virtual space.

An effect of the first embodiment will be described.

(1-1) The distribution user can call for the viewing user to participate in the content distributed by the distribution user as the player.
The distribution user may allow the viewing user who has responded to the call by the distribution user to participate in the content as the player of its own friend party. Thus, it is facilitated for the distributor and the viewer to obtain a sense of unity.

(1-2) The applicant list includes one or more viewing users who have responded to the call by the distribution user. An order in the applicant list is sorted according to the history information relevant to the viewing users. Thus, the distribution user can select the viewing user according to the history information.

(1-3) The content includes at least one of voice or text data. Thus, the viewing user can enjoy the content including the game play of the distribution user even further.

(1-4) The history information includes the viewing time period of the content. Thus, it is facilitated for the distribution user to find the viewing user who is interested in the content distributed by the distribution user.

(1-5) The viewing user can view the content distributed by the distribution user. Unlike the participation user who is participating in the content, the viewing user cannot operate the avatar. That is, at least some of functions of the viewing terminal 100B is restricted. Thus, a motivation for the viewing user to participate in the content as the participation user may increase.

(1-6) The participation user can similarly play the second part of the game as in the distribution user. As an example, as compared to the distribution user, there is no difference for the participation user in a range of operations which can be executed with regard to the move of the avatar, the action of the avatar, and the configuration of the avatar. As an example, as compared to the distribution terminal 100A, there is no difference for the participation terminal 100C with regard to the function of executing the second part of the game. As an example, as compared to the distribution terminal 100A, there is no difference in the specifics of the game provided by the game function for the participation terminal 100C. Thus, the participation user can similarly enjoy the game as in the distribution user.

### Second embodiment

In the gaming system 10, the distribution user may be able to invite the general user who is playing the first part of the game to participate in the party.

### Example of display screen in terminal and flow of processing related to display

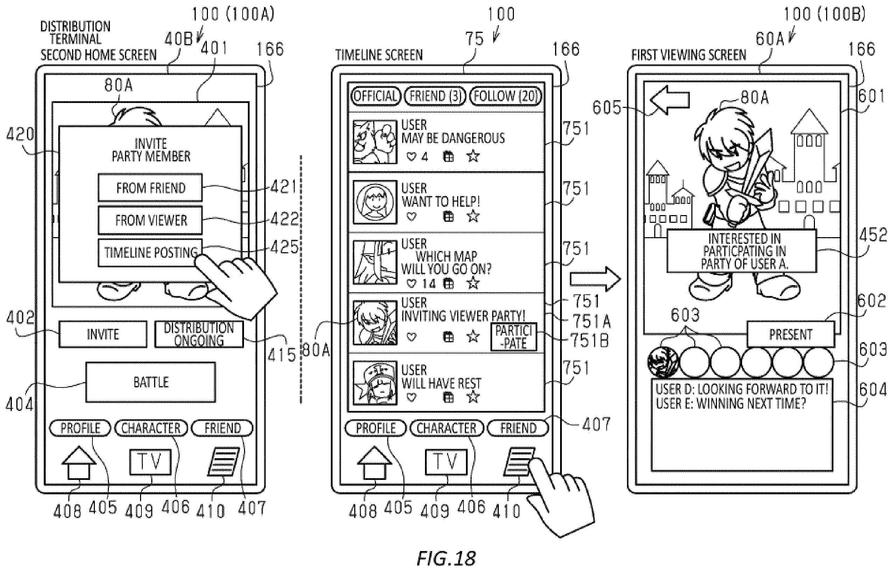

As illustrated in Fig. 18, the invitation window 420 on the second home screen 40B may further include a third invitation button 425. A configuration may be adopted where the invitation window 420 does not include at least either one of the first invitation button 421 and the second invitation button 422. An operation of instructing party member invitation through the timeline screen can be executed by performing the tap operation on a section in which the third invitation button 425 is displayed.

When the game is in the first part, the timeline screen 75 may be displayed on the monitor 166 by performing the tap operation on the timeline button 410 included in each of the home screens 40A and 40B. The timeline screen 75 may include a plurality of posting panels 751. For example, each of the posting panels 751 includes information indicating a comment post by a certain user. Each of the posting panels 751 may include various types of objects. As an example, the plurality of posting panels 751 is sorted in a chronological order of posting on the timeline screen 75.

An invitation posting panel 751A that is an example of the posting panel 751 includes a comment of the party invitation by the distribution user. As an example, the invitation posting panel 751A includes a user participation button 751B. An operation of instructing performing an entry application operation can be executed by performing the tap operation on a section in which the user participation button 751B is displayed.

When the entry application operation is executed on the timeline screen 75, the first viewing screen 60A is displayed on the monitor 166. The first viewing screen 60A may include a notification window 452. The notification window 452 may include text data of information indicating that a participation application to the party invited by the distribution user is executed.

### Party member invitation processing

Hereinafter, a flow of party member invitation processing will be described.

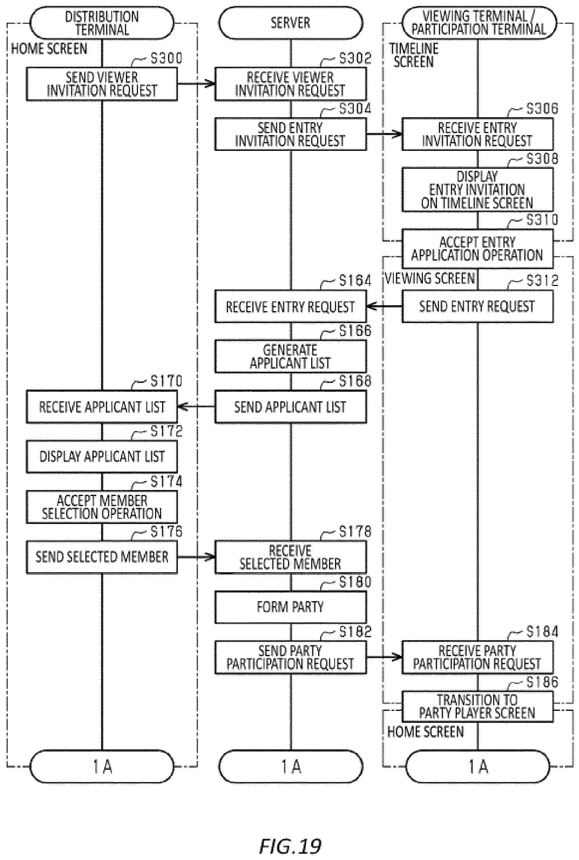

As illustrated in Fig. 19, in step S300, when the operation of instructing party member invitation through the timeline screen is accepted, the processor 110 of the distribution terminal 100A sends the viewer invitation request for timeline to the server 200 as the game module 101A. In step S302, the processor 210 of the server 200 receives the viewer invitation request for timeline as the game module 201A. In step S304, the processor 210 of the server 200 sends the entry invitation request for timeline to the general terminal 100D as the game module 201A. The entry invitation request for timeline is sent to all the general terminals 100D.

In step S308, when the operation of instructing display of the timeline screen 75 is accepted, the processor 110 of the general terminal 100D displays the timeline screen 75 on the monitor 166 as the game module 101A. The processor 110 of the general terminal 100D displays the timeline screen 75 including the invitation posting panel 751A on the monitor 166 as the game module 101A.

In step S310, the processor 110 of the general terminal 100D accepts the entry application operation as the game module 101A. In step S310, the processor 110 of the general terminal 100D displays the first viewing screen 60A on the monitor 166 as the viewing module 101C. Thus, the general terminal 100D turns into the viewing terminal 100B. In step S312, the processor 110 of the viewing terminal 100B sends the entry request to the server 200 as the viewing module 101C.

An effect of the second embodiment will be described.

(2-1) The distribution user can invite the general user who is playing the first part of the game to participate in the party. Thus, by targeting wider users, it is possible to call for the users to participate in the content as the player.

(2-2) Even when the content is not viewed, the general user can easily participate in the party to which the distribution user belongs or the party led by the distribution user. Thus, the participation in the content can be promoted.

(2-3) The call for the participation in the party is performed on the timeline screen 75. The timeline screen 75 is frequently checked by the user. Thus, the general user easily notices the invitation performed by the distribution user.

### Third embodiment

In the gaming system 10, when the game is in the second part, the distribution user may be able to invite the viewing user to participate in the party.

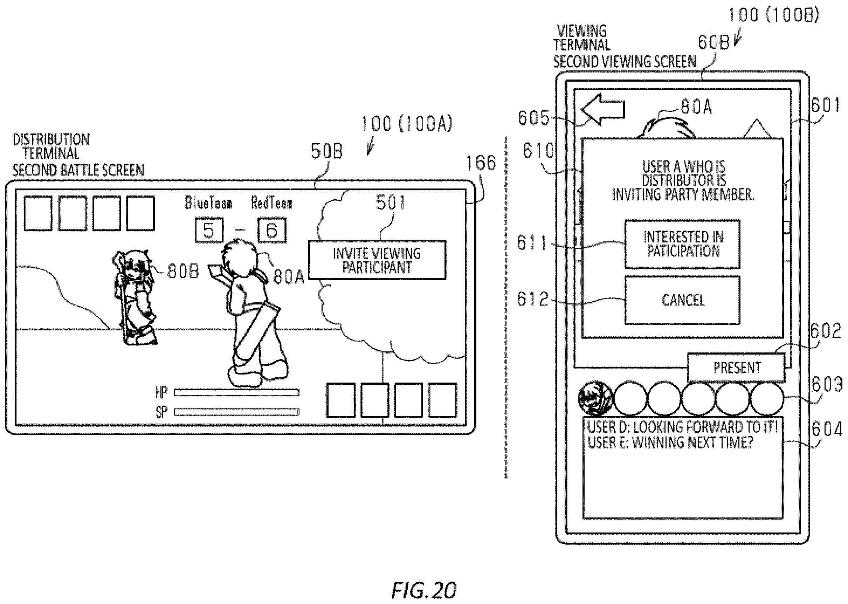

As illustrated in Fig. 20, the second battle screen 50B may further include a mid-battle invitation button 501. The invitation operation can be executed when the game is in the second part by performing the tap operation on a section in which the mid-battle invitation button 501 is displayed.

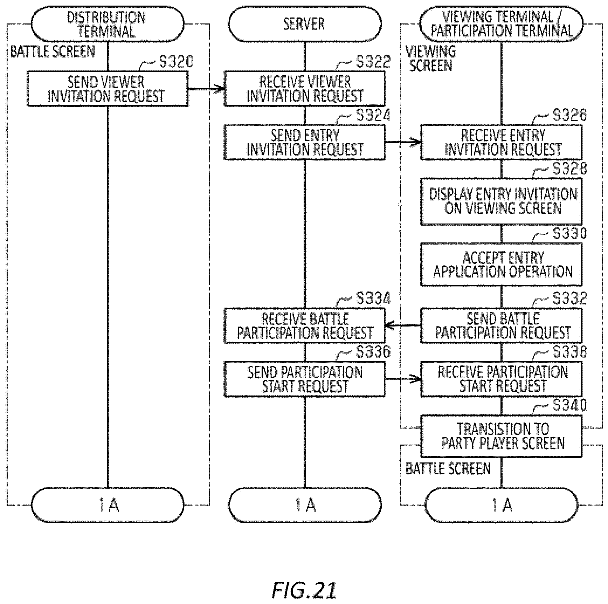

As illustrated in Fig. 21, in step S320, when the invitation operation is accepted, the processor 210 of the distribution terminal 100A sends the viewer invitation request to the server 200 as the game module 101A.

In step S322, the processor 210 of the server 200 receives the entry invitation request as the game module 201A. In step S324, the processor 210 of the server 200 sends the entry invitation request to the viewing terminal 100B as the distribution module 201B.

In step S326, the processor 110 of the viewing terminal 100B receives the entry invitation request as the viewing module 101C. In step S328, the processor 110 of the viewing terminal 100B displays the selection window 610 on the monitor 166 as the rendering module 104. As described above, the selection window 610 includes the participation interest button 611 and the cancel button 612.

In step S330, the processor 110 of the viewing terminal 100B accepts the entry application operation as the viewing module 101C. Note that when the operation of instructing not to participate in the content as the player is accepted, the processor 110 of the viewing terminal 100B closes the selection window 610 from the monitor 166. In step S332, the processor 110 of the viewing terminal 100B sends a battle participation request to the server 200 as the viewing module 101C.

In step S334, the processor 210 of the server 200 receives the battle participation request as the game module 101A. In step S334, the processor 210 of the server 200 causes the user of the viewing terminal 100B which has sent the battle participation request to join as the participation user to the party to which the distribution user belongs as the game module 101A. In step S336, the processor 110 of the server 200 sends a participation start request to the viewing terminal 100B as the game module 201A.

In step S338, the processor 110 of the viewing terminal 100B receives the participation start request. The processor 110 of the viewing terminal 100B displays the first battle screen 50A on the monitor 166 as the game module 101A. Thus, the viewing terminal 100B turns into the participation terminal 100C.

An effect of the third embodiment will be described.

(3-1) When the game is in the second part, the distribution user may allow the viewing user to participate in the party. Thus, when the game is in the second part and there is a vacancy in the party to which the distribution user belongs, the distribution user may easily allow the viewing user to participate in the party.

### Fourth embodiment

In the gaming system 10, when the game is in the second part, the distribution user may be able to invite the viewing user to participate in the party without requiring any operation by the distribution user.

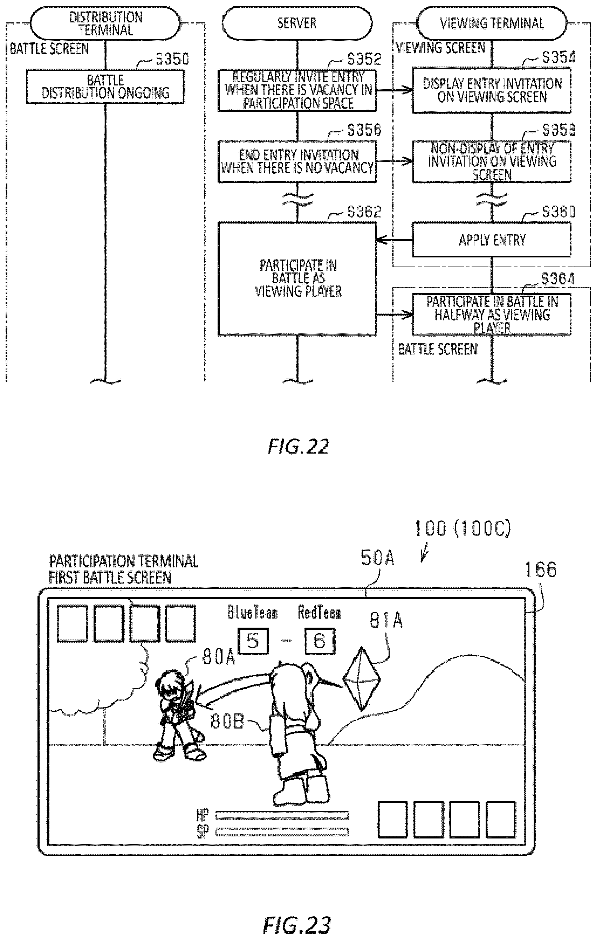

As illustrated in Fig. 22, as a premise, in step S350, the processor 110 of the distribution terminal 100A displays the second battle screen 50B on the monitor 166 as the rendering module 104.

In step S352, when there is a vacancy in a participation space, the processor 210 of the server 200 executes processing of regularly inviting an entry as the game module 201A. The processor 210 monitors a number of members in the party to which the distribution user belongs. When the number of members in the party to which the distribution user belongs is less than the upper limit of people, the processor 210 identifies that there is a vacancy in the participation space as the game module 201A. When there is a vacancy in the participation space, the processor 210 sends the entry invitation request to the viewing terminal 100B. That is, the processor 210 of the server 200 sends the entry invitation request to one or more viewing terminals 100B without requiring a reception of the viewer invitation request.

In step S354, the processor 110 of the viewing terminal 100B displays the second viewing screen 60B including the selection window 610 on the monitor 166 as the rendering module 104. The selection window 610 includes the participation interest button 611 and the cancel button 612.

In step S356, when there is no vacancy in the participation space, the processor 210 of the server 200 executes processing of ending the entry invitation as the game module 201A. The processor 210 monitors the number of members in the party to which the distribution user belongs. When the number of members in the party to which the distribution user belongs reaches the upper limit of people, the processor 210 identifies that there is no vacancy in the participation space as the game module 201A. When there is no vacancy in the participation space, the processor 210 sends an invitation end request to the viewing terminal 100B. That is, the processor 210 of the server 200 sends the invitation end request to one or more viewing terminals 100B without requiring a reception of a direct request to end the entry invitation from the distribution terminal 100A.

In step S358, the processor 110 of the viewing terminal 100B ends the display of the selection window 610 as the rendering module 104. In step S360, when the entry invitation request is received and the entry application operation is accepted, the processor 110 of the viewing terminal 100B sends the battle participation request to the server 200 as the viewing module 101C.

In step S362, when a battle participation request is received, the processor 210 of the server 200 causes the viewing user of the viewing terminal 100B which has sent the battle participation request to join the party to which the distribution user belongs as the participation user as the game module 101A. The processor 110 of the server 200 sends the participation start request to the viewing terminal 100B as the game module 201A.

In step S364, the processor 110 of the viewing terminal 100B displays the first battle screen 50A on the monitor 166 as the game module 101A. Thus, the viewing terminal 100B turns into the participation terminal 100C.

An effect by the configuration of the fourth embodiment will be described.

(4-1) The participation invitation to the party is performed even when the distribution user does not pay attention. Thus, when a vacancy has occurred in the party, a party member can be promptly filled up.

(4-2) When a vacancy has occurred in the party to which the distribution user belongs, the viewing user can participate as the participation user. Thus, a setting for the viewing user to proactively assist the distribution user can be provided.

### Fifth embodiment

In the gaming system 10, a difference in specifics of the game provided by the game function may exist between the participation terminal 100C and the distribution terminal 100A. That is, a participation form of the participation user is not limited to the participation as the party member.

As an example, in the gaming system 10, the participation user may be allowed to participate in the game play of the distribution user as an assisting player who assists the distribution user. As an example, in the gaming system 10, the participation user can operate an object which can exert some effect on the avatar of the distribution user or the avatar of the opponent party member. As an example, in the gaming system 10, the participation user may be able to operate an assisting object which assists the distribution user.

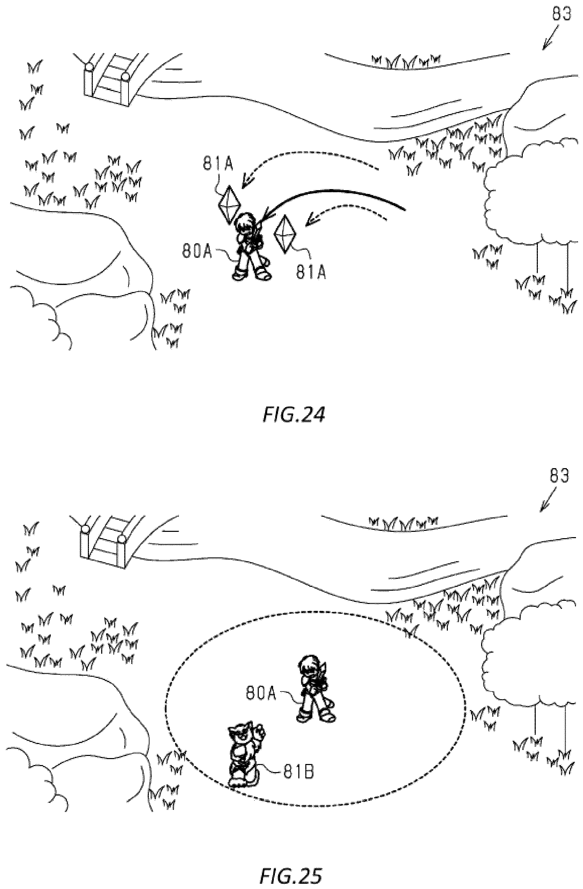

As illustrated in Fig. 23 and Fig. 24, the assisting object may be a weapon object 81A which allows a remote attack. As an example, the weapon object 81A moves to track the avatar 80A of the distribution user in the game space. The weapon object 81A cannot be moved by an operation by the participation user in the game space. As an example, the participation user operates the weapon object 81A such that the avatar of the opponent party member can be remotely attacked. In a move function of the object, as compared to the distribution terminal 100A, some of the functions of executing the second part in the game is restricted for the participation terminal 100C.

As illustrated in Fig. 25, as an example, the assisting object may be an assisting character 81B which can move and attack. In the drawing, as represented by using a broken line, the assisting character 81B cannot move to be away beyond a restriction distance with the avatar 80A of the distribution user set as the center. The assisting character 81B can freely move according to an operation by the participation user as long as the assisting character does not leave beyond the restriction distance from the avatar 80A of the distribution user. The assisting character 81B can attack the avatar of the opponent party member. In the move function of the object, as compared to the distribution terminal 100A, some of the function of executing the second part in the game is restricted for the participation terminal 100C.

A configuration may be adopted where the gaming system 10 does not display the assisting character 81B on the monitor 166 of each of the terminals 100 used by the distribution user, the party members of the distribution user, and the opponent party members. In the display function of the object, as compared to the distribution terminal 100A, some of the functions of executing the second part in the game is restricted for the participation terminal 100C. The assisting character 81B can freely move according to an operation of the participation user. The assisting character 81B may be able to attack the assisting character 81B of the opponent party. The assisting character 81B may be able to attack the avatar of the opponent party member. The assisting character 81B may be able to assist the party members of the distribution user including the distribution user.

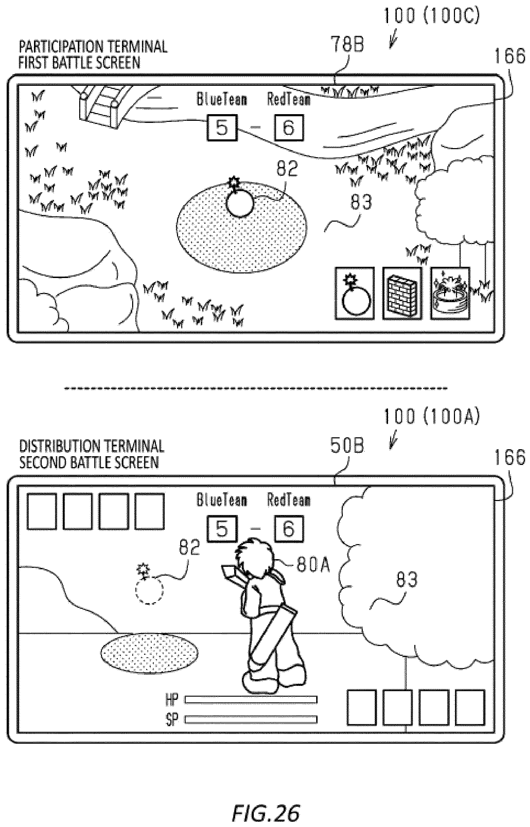

As illustrated in Fig. 26, as an example, in the gaming system 10, the participation user may be able to arrange an assisting object 82 which cause some act on the avatar 80A of the distribution user, the avatar of the opponent party member, or a terrain 83 in the game space. As an example, an object arrangement screen 78B is displayed on the monitor 166 of the participation terminal 100C. The object arrangement screen 78B is a screen different from the first battle screen 50A and the second battle screen 50B. As an example, the object arrangement screen 78B is generated by arranging a virtual camera in a position looking down at the viewing space.

As an example, the assisting object 82 may be a weapon for attacking the avatar in a predetermined range. As an example, the assisting object 82 may be an obstacle through which the avatar 80A of the distribution user or the avatar of the opponent party member cannot pass. As an example, the assisting object 82 may be a recovery area for a capacity value of the avatar 80A of the distribution user to recovery. The assisting object 82 arranged by the participation user may also be displayed on the monitor 166 in the distribution terminal 100A.

An effect of the fifth embodiment will be described.

(5-1) The participation user can enjoy the second part of the game in a procedure different from that of the distribution user. Thus, the motivation for the viewing user to participate in the content as the participation user may increase.

The above described embodiments can be implemented by the following modifications. The above described embodiments and the following modification examples can be implemented in combination with each other within a range without creating a technical contradiction.
- The distribution terminal 100A, the viewing terminal 100B, the participation terminal 100C, and the general terminal 100D may be achieved as computers with configurations different from each other.
- The processor 110 of the server 200 may be configured to generate play video of the game according to the received play information and to stream the play video as the distribution module 201B. The processor 110 of the viewing terminal 100B may display the streamed play video of the game in the viewing window 601 as the viewing module 101C.
- The content may include a voice of the distribution user. The processor 110 of the distribution terminal 100A converts a voice signal received from the microphone 160 into voice data, and sends the voice data to the server 200 as the distribution module 101B. The processor 210 of the server 200 generates the distribution information according to the received voice data as the distribution module 201B. The processor 110 of the viewing terminal 100B outputs the voice according to the distribution information from the speaker 162 as the viewing module 101C.
- The content may include a voice of the participation user. The processor 110 of the participation terminal 100C converts a voice signal received from the microphone 160 into voice data, and sends the voice data to the server 200 as the distribution module 101B. The processor 210 of the server 200 generates the distribution information according to the voice data received from the participation terminal 100C as the distribution module 201B.
- The content may include text data. When an input operation of text data is accepted, the processor 110 of the distribution terminal 100A sends the text data specified by the input operation to the server 200 as the distribution module 101B. The processor 210 of the server 200 sends the received text data to the viewing terminal 100B as the distribution module 201B. The processor 110 of the viewing terminal 100B displays the received text data on the monitor 166 as the viewing module 101C.
- One or more modules included in the control modules 101 and 201 may be achieved by a circuit such as an ASIC, a PLD, an FPGA, or an MCU.
- One or more modules included in the control modules 101 and 201 may be achieved by software using a processor. A computer including at least one of the control module 101 or 201 includes a processor, a memory, and a storage. The program and various types of data are recorded in the storage so as to be readable by the processor. The program is developed in the memory. The processor then reads the program from the storage to be executed, so that an act of the present disclosure is achieved. As already described above, the storage may be achieved as a non-volatile storage device.
- The program may be supplied to the above described computer via any transmission medium (such as a communication network or a broadcast wave) which can transmit this program.
- The program may be recorded on a recording medium such as a magnetic disc (such as a floppy disk or a hard disk), an optical disc (such as a CD-ROM, a DVD, or an MO), or a semiconductor memory (such as a ROM, a RAM, or a flash memory).

The present disclosure includes the following examples. Reference signs of the components of the embodiments are added for ease of understanding but not for limitation.

(Supplement 1) A program which causes a computer (200) to execute receiving play information according to game play executed with a distribution terminal (100A) by a distribution user from the distribution terminal (S106), distributing distribution information according to the play information that is received to one or more viewing terminals (100B) to allow a viewing user using the one or more viewing terminals to view content including at least the game play by the distribution user (S128), receiving invitation information sent by the distribution terminal which has accepted an invitation operation by the distribution user (S152), when the invitation information is received, sending calling information to the viewing terminal, and instructing the one or more viewing terminals to perform a notification for calling for participation in the content as a player (S154), receiving participation information sent by the viewing terminal which has accepted a participation operation by the viewing user among the one or more viewing terminals (S164), forming a party including at least the distribution user and the viewing user using the viewing terminal which has received the participation information (S180), and causing the viewing user included in the party that is formed to participate in the content as the player, the viewing user including one or more viewing users (S182).

(Supplement 2) The program according to Supplement 1, in which the program further causes the computer (200) to execute, when the viewing terminal (100B) which has received the participation information includes a plurality of viewing terminals, generating a list (431) of the viewing users using the respective viewing terminals (S166) and sending the list that is generated to the distribution terminal (100A) (S168), and the generating the list includes sorting an order in the list according to history information relevant to the viewing users using the viewing terminals which have received the participation information.

(Supplement 3) The program according to Supplement 1 or Supplement 2, in which the content includes at least one of voice or text data.

(Supplement 4) The program according to Supplement 2, in which the history information includes a viewing time period of the content in the viewing terminals (100B) which have received the participation information.

(Supplement 5) The program according to any one of Supplement 1 to Supplement 4, in which the program further causes the computer (200) to execute restricting at least some of functions of the viewing terminal (100B) used by the viewing user who has not participated in the content (S128).

(Supplement 6) A computer (200) including a storage device (230) storing the program according to any one of Supplement 1 to Supplement 5, and a processor (210) which executes the program stored in the storage device.

(Supplement 7) A system (10) including the computer (200) according to Supplement 6.

(Supplement 8) A method comprising:
receiving, by a computer (200), play information according to game play executed with a distribution terminal (100A) by a distribution user from the distribution terminal (S106), distributing, by the computer, distribution information according to the play information that is received to one or more viewing terminals (100B) to allow a viewing user using the one or more viewing terminals to view content including at least the game play by the distribution user (S128), receiving, by the computer, invitation information sent by the distribution terminal which has accepted an invitation operation by the distribution user (S152), when the invitation information is received, sending, by the computer, calling information to the viewing terminal, and instructing the one or more viewing terminals to perform display for calling for participation in the content as a player (S154), receiving, by the computer, participation information sent by the viewing terminal which has accepted a participation operation by the viewing user among the one or more viewing terminals (S164), forming, by the computer, a party including at least the distribution user and the viewing user using the viewing terminal which has received the participation information (S180), and causing, by the computer, the viewing user included in the party that is formed to participate in the content as the player, the viewing user including one or more viewing users (S182).

It will be apparent to those skilled in the art that the present invention may be embodied in other specific forms without departing from its technical spirit. For example, some of the parts described in the embodiments (or one or a plurality of forms thereof) may be omitted, or some parts may be combined with each other. The scope of the present invention should be determined with reference to the appended claims along with a full range of equivalents with which such claims are entitled.

### EXPLANATION OF REFERENCES

10: gaming system; 40A: first home screen; 40B: second home screen; 50A: first battle screen; 50B: second battle screen; 60A: first viewing screen; 60B: second viewing screen; 70: matching screen; 75: timeline screen; 78B: object arrangement screen; 80A, 80B, 80C: avatar; 81A: weapon object; 81B: assisting character; 82: assisting object; 83: terrain; 90: network; 100: terminal; 100A: distribution terminal; 100B: viewing terminal; 100C: participation terminal; 100D: general terminal; 101: control module; 101A: game module; 101B: distribution module; 101C: viewing module; 104: rendering module; 105: memory module; 106: communication module; 107: input and output module; 110: processor; 120: memory; 130: storage; 140: communication IF; 150: input and output IF; 160: microphone; 162: speaker; 164: touch screen; 166: monitor; 167: touch sensor; 180: communication bus; 190: input and output device; 200: server; 200A: game server; 200B: distribution server; 201: control module; 201A: game module; 201B: distribution module; 205: memory module; 206: communication module; 207: input and output module; 210: processor; 220: memory; 230: storage; 240: communication IF; 250: input and output IF; 280: communication bus; 401: avatar window; 402: invitation icon; 403: distribution start icon; 404: battle icon; 405: profile icon; 406: character icon; 407: friend icon; 408: home button; 409: viewing button; 410: timeline button; 415: distribution ongoing icon; 420: invitation window; 421: first invitation button; 422: second invitation button; 425: third invitation button; 430: member selection window; 431: applicant list; 432: scrollbar; 433: selection checkbox; 434: drawing button; 435: decision button; 440: selection confirmation window; 441: confirmation button; 442: cancel button; 450: participation standby window; 452: notification window; 460: participation confirmation button; 480: distribution panel; 501: mid-battle invitation button; 601: viewing window; 602: present button; 603: member icon; 604: chat window; 605: return button; 610: selection window; 611: participation interest button; 612: cancel button; 701: avatar window; 751: posting panel; 751A: invitation posting panel; 751B: user participation button.

## Claims

1. A a program which causes a computer to execute:
receiving play information according to game play executed with a distribution terminal by a distribution user from the distribution terminal;
distributing distribution information according to the play information that is received to one or more viewing terminals to allow a viewing user using the one or more viewing terminals to view content including at least the game play by the distribution user;
receiving invitation information sent by the distribution terminal which has accepted an invitation operation by the distribution user;
when the invitation information is received, sending calling information to the viewing terminal, and instructing the one or more viewing terminals to perform a notification for calling for participation in the content as a player;
receiving participation information sent by the viewing terminal which has accepted a participation operation by the viewing user among the one or more viewing terminals;
forming a party including at least the distribution user and the viewing user using the viewing terminal which has received the participation information; and
causing the viewing user included in the party that is formed to participate in the content as the player, the viewing user including one or more viewing users.

2. The program according to claim 1, in which
the program further causes the computer to execute:
when the viewing terminal which has received the participation information includes a plurality of viewing terminals, generating a list of the viewing users using the respective viewing terminals; and
sending the list that is generated to the distribution terminal, and
the generating the list includes sorting an order in the list according to history information relevant to the viewing users using the viewing terminals which have received the participation information.

3. The program according to claim 1 or 2, in whichthe content includes at least one of voice or text data.

4. The program according to claim 2, wherein the history information includes a viewing time period of the content in the viewing terminals which have received the participation information.

5. The program according to any one of claims 1 to 4, in which
the program further causes the computer to execute restricting at least some of functions of the viewing terminal used by the viewing user who has not participated in the content.

6. A computer including:
a storage device storing the program according to any one of claims 1 to 5, ;
and a processor which executes the program stored in the storage device.

7. A system including the computer according to claim 6.

8. A method comprising:
receiving, by a computer, play information according to game play executed with a distribution terminal by a distribution user from the distribution terminal;
distributing, by the computer, distribution information according to the play information that is received to one or more viewing terminals to allow a viewing user using the one or more viewing terminals to view content including at least the game play by the distribution user;
receiving, by the computer, invitation information sent by the distribution terminal which has accepted an invitation operation by the distribution user;
when the invitation information is received, sending, by the computer, calling information to the viewing terminal, and instructing the one or more viewing terminals to perform display for calling for participation in the content as a player;
receiving, by the computer, participation information sent by the viewing terminal which has accepted a participation operation by the viewing user among the one or more viewing terminals;
forming, by the computer, a party including at least the distribution user and the viewing user using the viewing terminal which has received the participation information; and
causing, by the computer, the viewing user included in the party that is formed to participate in the content as the player, the viewing user including one or more viewing users.
